# EUROPÄISCHE PATENTSCHRIFT

(11) **EP 3 823 788 B1**
(45) Veröffentlichungstag und Bekanntmachung des Hinweises auf die Patenterteilung: **25.03.2026**
(21) Anmeldenummer: 19742594.5
(22) Anmeldetag: 19.07.2019
(51) Int. Cl.: B23Q 9/00

(54) **HALTEELEMENT FÜR EINE VORRICHTUNG ZUM STÜTZEN UND/ODER FÜHREN**
HOLDING ELEMENT FOR A SUPPORTING AND/OR GUIDING DEVICE
ÉLÉMENT DE RETENUE POUR UN DISPOSITIF DE SUPPORT ET/OU DE GUIDAGE

(30) Priorität: 20.07.2018 DE 102018117678
(43) Veröffentlichungstag der Anmeldung: 26.05.2021
(60) Teilanmeldung: 26157899.1
(73) Patentinhaber: Festool GmbH, 73240 Wendlingen am Neckar (DE)
(72) Erfinder: SPENGLER, Wolfgang, 73272 Neidlingen (DE)
(74) Vertreter: Patentanwälte Bregenzer und Reule Partnerschaftsgesellschaft mbB
(86) Internationale Anmeldenummer: PCT/EP2019/069599
(87) Internationale Veröffentlichungsnummer: WO 2020/016447

(56) Entgegenhaltungen:
- WO-A1-2017/150812
- WO-A2-03/049899
- DE-A1- 102009 029 108
- DE-U1- 202013 104 555

## Beschreibung

Die Erfindung betrifft ein Halteelement für eine Vorrichtung zum Stützen und/oder Führen einer Werkzeugmaschine, eines Werkzeugs oder eines Werkstücks, gemäß dem Oberbegriff des Anspruchs 1.

Ein derartiges Halteelement ist in DE 20 2013 104 555 U1 erläutert. Aus DE 20 2013 104 555 U1 ist zudem eine Führungsschiene bekannt, die magnetisch am Werkstück hält.

Ein Anlagekörper in Gestalt einer Führungsschiene, an der eine Hand-Werkzeugmaschine entlang führbar ist, ist beispielsweise in DE 10 2008 059 838 A1 erläutert. Die Führungsschiene wird sozusagen lose auf das Werkstück aufgelegt, wobei an ihrer Unterseite reibschlüssige Komponenten, beispielsweise Gummielemente oder dergleichen, als Halteelemente angeordnet sind, damit die Führungsschiene einigermaßen an Ort und Stelle bleibt.

Eine Rundlochlehre ist in DE 20 2016 003 907 U1 beschrieben. Die DE 10 2007 009 641 A1 betrifft eine Vorrichtung zur Führung eines Fräswerkzeugs mit Saugköpfen.

Für eine exakte Werkstückbearbeitung, zum Beispiel für einen Sägeschnitt, ist eine derartige Handhabung jedoch nicht ausreichend. Dann kann man die Führungsschiene beispielsweise mit dem Untergrund verschrauben oder einen Nagel durch die Führungsschiene hindurchtreiben, wofür die in DE 10 2008 059 838 A1 gezeigte Führungsschiene beispielsweise an ihren vorderen und hinteren Längsenden jeweils ein Loch aufweist. Die Handhabung ist dementsprechend schwierig. Zudem wird das Werkstück durch die Nägel oder Schrauben zur Befestigung der Führungsschiene beschädigt.

Zur Lösung der Aufgabe ist ein Halteelement gemäß der technischen Lehre des Anspruchs 1 vorgesehen.

Ein verschlissenes Halteelement kann somit gegen ein anderes, unverbrauchtes Halteelement ersetzt werden. So kann beispielsweise ein Halteelement, dessen Klebefläche nicht mehr klebt, durch ein anderes Halteelement ersetzt werden. Aber auch der Austausch alternativ arbeitender oder funktionierender Halteelemente gelingt auf diesem Wege einfach. So kann beispielsweise ein Halteelement, welches eine Klebefläche aufweist, gegen ein Halteelement mit einem Saugabschnitt ausgetauscht werden.

Das Halteelement ist also mithin formschlüssig an dem Anlagekörper befestigbar, wobei dieser Formschluss ein Befestigungsmittel darstellt. Das Befestigungsmittel kann aber auch mehrere und/oder unterschiedliche Befestigungsmittel umfassen, wie noch deutlicher wird.

Es ist ein Grundgedanke, dass das Halteelement den Anlagekörper lösbar mit dem Werkstück fixiert, wozu ein Haftmittel vorgesehen ist, welches von der Arbeitsoberfläche, insbesondere rückstandsfrei, wieder entfernbar ist, ohne die Arbeitsfläche zu beschädigen. Somit können beispielsweise empfindliche Werkstücke bearbeitet werden. Dennoch hat der Anlagekörper einen festen Halt an der Arbeitsoberfläche, wodurch beispielsweise eine Werkzeugmaschine, zum Beispiel eine Säge, eine Oberfräse oder dergleichen, relativ zum Werkstück besser positionierbar ist, beispielsweise fixierbar ist.

Der Anlagekörper ist beispielsweise ein Bestandteil einer Werkzeugmaschine oder zum Führen einer Werkzeugmaschine geeignet. Der Anlagekörper kann aber auch zum Führen beispielsweise eines manuell zu bedienenden Hand-Werkzeugs, insbesondere eines Schneidwerkzeugs, dienen. Weiterhin kann der Anlagekörper ein Werkstück stützen.

Das Befestigungsmittel zum Befestigen des Halteelements am Anlagekörper kann viele Varianten umfassen, beispielsweise formschlüssige Halterungen, Steckaufnahmen oder dergleichen. Weiterhin ist es möglich, dass das Halteelement sozusagen ein Rastelement bildet, das mit dem Anlagekörper verrastbar ist.

Das Befestigungsmittel weist vorteilhaft mindestens eine Formschlusskontur an dem Halteelement für einen formschlüssigen Halt an einer Halteelement-Aufnahme des Anlagekörpers, insbesondere einer Aussparung und/oder mindestens einer Hintergreiffläche, zum Beispiel einem Hinterschnitt, für das Halteelement aufweist.

Der Anlagekörper weist vorzugsweise mindestens eine Halteelement-Aufnahme für das Halteelement auf. Die Halteelement-Aufnahme erstreckt sich vorzugsweise von der Anlagefläche zu einer zu der Anlagefläche entgegengesetzten Oberseite des Anlagekörpers. Somit kann das Halteelement von der Oberseite her in die Halteelement-Aufnahme eingebracht werden. Bevorzugt ist die Anlagefläche an einem Plattenabschnitt des Anlagekörpers und/oder neben einer Führungsaufnahme oder einem Führungsvorsprung und/oder an einer planen Führungsfläche angeordnet.

Die mindestens eine Halteelement-Aufnahme des Anlagekörpers ist vorteilhaft von einer von der Anlagefläche abgewandten Seite, insbesondere von einer zu der Anlagefläche entgegengesetzten Seite, des Anlagekörpers her zugänglich oder ist an dieser Seite offen oder weist eine Öffnung an dieser Seite auf.

Die mindestens eine Halteelement-Aufnahme ist vorzugsweise abseits und/oder neben und/oder außerhalb einer Führungskontur des Anlagekörpers, die zum Führen des Werkzeugs oder der Werkzeugmaschine vorgesehen ist, angeordnet. Die Führungskontur ist oder umfasst beispielsweise eine vor eine Oberseite des Anlagekörpers oder der Führungsschiene vorstehende Führungsrippe, die vorzugsweise zur Anlagefläche hin offen ist.

Das Halteelement hat vorzugsweise eine Flachgestalt oder weist eine derartige Gestalt auf, dass es im in der Halteelement-Aufnahme aufgenommenen Zustand, wenn es den Anlagekörper bezüglich der Arbeitsfläche fixiert, nicht vor eine Führungsfläche oder Stützfläche vorsteht, an der das Werkzeug oder die Werkzeugmaschine an dem Anlagekörper geführt oder abgestützt ist, und/oder dass die Werkzeugmaschine oder das Werkzeug über das in der Halteelement-Aufnahme aufgenommene Halteelement hinweg beweglich führbar ist.

Eine bevorzugtes Konzept sieht vor, dass das Halteelement von einer zu der Anlagefläche entgegengesetzten Oberseite des Anlagekörpers zugänglich ist, beispielsweise zum Verstellen zwischen dem Positionierzustand und dem Haftzustand, jedoch in dem Haftzustand maximal so weit vor eine Oberseitenfläche an der Oberseite des Anlagekörpers vorsteht, dass das Werkzeug oder die Werkzeugmaschine entlang der Oberseite des Anlagekörpers parallel zur Anlagefläche oder mit einer Richtungskomponente parallel zur Anlagefläche des Anlagekörpers über das Halteelement hinweg führbar ist. Beispielsweise steht das Halteelement um ein vorbestimmtes maximales Maß vor die Oberseitenfläche des Anlagekörpers vor oder fluchtet mit der Oberseitenfläche oder steht hinter die Oberseitenfläche zurück.

Das Halteelement kann beim Einbringen in die Halteelement-Aufnahme des Anlagekörpers unmittelbar in den Haftzustand bringbar sein. Es ist aber auch möglich, dass das Halteelement in der Halteelement-Aufnahme einen vorpositionierbar ist oder einen Vorpositionierzustand einnimmt, in dem das Halteelement in der Halteelement-Aufnahme zumindest partiell gehalten ist und das Haftmittel noch in dem Positionierzustand ist. Der Anlagekörper ist dann relativ zur Arbeitsfläche verstellbar. In dem Vorpositionierzustand ist beispielsweise ein Abstand zwischen einer Haftfläche des Haftmittels und der Arbeitsfläche des Werkstücks oder der Wand vorhanden. Der Abstand kann beispielsweise ein Parallelabstand sein. Es ist aber auch möglich, dass das Halteelement in dem Vorpositionierzustand aus der Halteelement-Aufnahme partiell ausgeschwenkt ist und/oder einen bogenförmigen Verlauf, insbesondere im Bereich einer Haftfläche des Haftmittels, aufweist. Innerhalb der Halteelement- Aufnahme ist das Halteelement dann weiterhin beweglich aufgenommen, beispielsweise verschwenkbar und/oder verschiebbar, insbesondere translatorisch oder linear verschieblich, und/oder verformbar, um das Haftmittel aus dem Positionierzustand in den Haftzustand zu verstellen.

Die Formschlusskontur weist vorteilhaft mindestens eine Hintergreif-Kontur zum Hintergreifen mindestens einer Hintergreiffläche der Halteelement-Aufnahme des Anlagekörpers auf, wobei die Hintergreif-Kontur die Hintergreiffläche des Anlagekörpers, wenn sie an der Hintergreif-Kontur anliegt, mit mindestens einer in Richtung der Anlagefläche gerichteten Stützkraftkomponente im Sinne eines Haltens des Anlagekörpers an der Arbeitsfläche stützt. Die Hintergreiffläche verläuft also beispielsweise parallel oder schräg zu der Anlagefläche. Die Hintergreif-Kontur weist vorzugsweise mindestens einen Hintergreifabschnitt auf, der sich parallel oder mit einer Richtungskomponente parallel zu einer Haftfläche des Halteelements, mit der dieses an der Arbeitsfläche anhaften kann, erstreckt. Beispielsweise können die Hintergreiffläche schräg zur Anlagefläche und die Hintergreif-Kontur schräg zur Haftfläche verlaufen.

Die mindestens eine Hintergreif-Kontur umfasst beispielsweise eine Schwalbenschwanzkontur, einen Stützvorsprung, einen Haken oder dergleichen. Kombinationen sind ohne weiteres möglich. An der Halteelement-Aufnahme des Anlagekörpers sind dazu passende Gegenkonturen vorhanden, beispielsweise eine Stützfläche für einen Stützvorsprung, eine Hakenaufnahme oder eine den Haken stützende Stützfläche für den Haken. Die Schwalbenschwanzkontur greift in eine komplementäre Schwalbenschwanz-Gegenkontur formschlüssig ein.

Bevorzugt ist es, wenn die Halteelement-Aufnahme an einander gegenüberliegenden Seiten jeweils eine Hintergreiffläche und das Halteelement an einander entgegengesetzten Seiten, die den vorgenannten gegenüberliegen Seiten der Halteelement-Aufnahme zugeordnet sind, jeweils eine Hintergreifkontur aufweisen. Die Hintergreifflächen können beispielsweise trichterartig schräg aufeinander zu verlaufen oder parallel sein. Beispielsweise können die Hintergreifflächen an einer zu der Anlagefläche entgegengesetzten Seite des Anlagekörpers vorgesehen sein Die Hintergreifkonturen können beispielsweise schräg zur Haftfläche des Haftmittels verlaufen, aber auch parallel dazu.

In die Halteelement-Aufnahme kann das Halteelement beispielsweise eingesteckt und/oder eingeschwenkt werden. Vorzugsweise liegt das Halteelement dann formschlüssig an mindestens zwei einander entgegengesetzten oder gegenüberliegenden Seiten der Halteelement-Aufnahme an. Es ist möglich, dass das Halteelement in der Halteelement-Aufnahme entlang dieser gegenüberliegenden Seiten verschieblich gelagert ist. Ein Hinterschnitt an der Halteelement-Aufnahme verhindert beispielsweise, dass das Halteelement in Richtung seines Haftmittels oder in Richtung der Arbeitsfläche aus der Halteelement-Aufnahme heraus gelangen kann.

Die Halteelement-Aufnahme kann beispielsweise ein Fenster oder eine Durchtrittsöffnung, die sich zwischen der Anlagefläche und einer zu der Anlagefläche entgegengesetzten Oberseite des Anlagekörpers erstreckt, umfassen. Das Halteelement kann in die Durchtrittsöffnung, die insoweit eine Einstecköffnung oder Steckaufnahme darstellt, eingesteckt werden, so dass beispielsweise im eingesteckten Zustand das Haftmittel in einer Ebene mit der Anlagefläche liegt oder vor die Anlagefläche vorsteht. Eine Steckachse, entlang derer das Halteelement in die Halteelement-Aufnahme einsteckbar ist, verläuft vorzugsweise mit mindestens einer Richtungskomponente oder insgesamt rechtwinkelig zur Anlagefläche des Anlagekörpers.

Es ist auch möglich, dass das Halteelement bei der Montage oder Anordnung in der Halteelement-Aufnahme aus dem Positionierzustand in den Haftzustand schwenkbar ist. Dazu kann das Halteelement einen Schwenkabschnitt aufweisen und/oder das Halteelement, wenn es zumindest partiell in Eingriff mit der Halteelement-Aufnahme ist, in der Halteelement-Aufnahme schwenkbar sein. Mithin ist es also möglich, dass ein Halteelement in einer Halteelement-Aufnahme des Anlagekörpers zur Verstellung aus dem Positionierzustand in den Haftzustand schwenkbar aufgenommen ist.

Es ist möglich, dass das Halteelement in der Halteelement-Aufnahme beweglich oder verschieblich aufgenommen ist, sodass das Halteelement als Ganzes und/oder das Haftmittel aus einem oder dem Positionierzustand, in dem das Haftmittel noch nicht in Kontakt mit der Arbeitsfläche ist und/oder hinter die Anlagefläche zurückstehend angeordnet ist, durch Verstellung, insbesondere Verschiebung, in der Halteelement-Aufnahme in einen oder den Haftzustand bringbar ist, bei dem das Haftmittel an der Arbeitsfläche anhaftet und den Anlagekörper an der Arbeitsfläche fixiert. Das erfindungsgemäße Halteelement ist bei dieser Ausgestaltung sowohl durch seine Biegeflexibilität als auch durch seine Verschieblichkeit oder Verstellbarkeit in der Halteelement-Aufnahme aus dem Positionierzustand in den Haftzustand bringbar.

Es ist weiterhin möglich, dass die Halteelement-Aufnahme eine Längsführung zum Führen des Halteelementes entlang einer Längsachse aufweist, die sich z.B. parallel zu der Anlagefläche erstreckt oder eine Richtungskomponente parallel zur Anlagefläche aufweist. Die Längsführung kann an einem Längsende geschlossen sein, also in der Art einer Tasche ausgestaltet sein. Bevorzugt ist die Längsführung an ihren Längsendbereichen offen, so dass das Halteelement am einen Längsendbereich der Längsführung in dieselbe einführbar und am anderen Längsendbereich aus der Längsführung herausführbar ist. Damit ist beispielsweise eine bidirektionale, nahezu unbegrenzte Verschieblichkeit des Anlagekörpers relativ zum Halteelement möglich.

Die mindestens eine Formschlusskontur des Halteelements ist vorzugsweise an einer zu dem Haftmittel oder der Haftfläche des Haftmittels entgegengesetzten Seite oder Oberseite des Halteelements angeordnet.

Die mindestens eine Formschlusskontur des Halteelements kann beispielsweise einen oder mehrere Stützvorsprünge umfassen.

Bevorzugt ist es, wenn das Halteelement zu einer Ausrichtung oder einem Halt des Haftmittels, beispielsweise parallel oder im Wesentlichen parallel, bezüglich der Anlagefläche des Anlagekörpers mindestens einen sich quer zu dem Haftmittel, insbesondere dessen Haftfläche, erstreckenden Stützvorsprung zum Abstützen an einer zur Anlagefläche parallelen oder in einem Winkel von weniger als 90° zu der Anlagefläche geneigten Stützkontur des Anlagekörpers aufweisen. Der mindestens eine Stützvorsprung ist beispielsweise ein Hakenvorsprung oder umfasst einen Hakenvorsprung.

Der mindestens eine Stützvorsprung bildet zweckmäßigerweise einen Bestandteil einer Anordnung mehrerer Stützvorsprünge. Bevorzugt hat das Halteelement an einander entgegengesetzten Seiten jeweils mindestens einen Stützvorsprung, insbesondere aber eine Reihe nebeneinander angeordneter Stützvorsprünge. Der Stützvorsprung kann beispielsweise ein Hakenvorsprung oder Stützhaken sein. Der mindestens eine Stützvorsprung kann beispielsweise in eine Hintergreiffläche oder Hinterschnittfläche des Anlagekörpers eingreifen. Die Hintergreiffläche ist beispielsweise an einer zu der Anlagefläche entgegengesetzten Oberseite des Anlagekörpers vorgesehen. Mithin sorgt der Stützvorsprung also beispielsweise dafür, dass der Anlagekörper von dem Halteelement nicht in einer Bewegungsrichtung mit einer Bewegungskomponente, die rechtwinkelig zu der Arbeitsfläche oder der Anlagefläche ist, von dem Halteelement entfernbar ist.

Der Anlagekörper weist zweckmäßigerweise einen zu der Anlagefläche entgegengesetzte Oberseite auf, die die Stützkontur bildet oder an der die Stützkontur angeordnet ist. Beispielsweise ist die Stützkontur als eine Schrägfläche an der bereits als Durchtrittsöffnung beschriebenen Halteelement-Aufnahme ausgestaltet. Es ist aber auch möglich, dass die Oberseite selbst die Stützkontur bildet, d.h., dass beispielsweise ein Hakenvorsprung oder sonstiger Teil des Stützvorsprungs sich unmittelbar an der Oberseite des Anlagekörpers abstützt.

Weiterhin kann die Stützkontur eine Führungsaufnahme einer Linearführung umfassen oder eine solche bilden, während der mindestens eine Stützvorsprung einen Führungsvorsprung zum linearen Führen des Halteelementes an dem Anlagekörper bildet und in die Führungsaufnahme eingreift. Die Führungsaufnahme kann beispielsweise in der Art einer Nut ausgestaltet sein. Weiterhin ist die Führungsaufnahme vorteilhaft in der Art eines Hinterschnitts oder einer Führungsnuten ausgestaltet.

Bevorzugt ist es, wenn das Halteelement mindestens eine zu einer Haftoberfläche des Haftmittels winkelige, beispielsweise rechtwinkelige, Stützfläche zum Abstützen an dem Anlagekörper aufweist, so dass der Anlagekörper in Bezug auf parallel zu der Anlagefläche wirkende Kräfte an dem Halteelement abgestützt ist. Bei der Stützfläche handelt es sich vorzugsweise um die bereits erwähnte Gleitfläche. An der Stützfläche oder neben der Stützfläche ist vorzugsweise mindestens ein Rastvorsprung oder eine sonstige Rastkontur angeordnet.

Die mindestens eine Stützfläche umfasst vorzugsweise mehrere Stützflächen, beispielsweise an einander entgegengesetzten Seiten des Halteelements vorgesehene Stützflächen. Die Stützflächen sind vorzugsweise so vorgesehen, dass sie das Halteelement in Bezug auf alle parallel zu der Anlagefläche wirkenden Kräfte an dem Anlagekörper abstützen.

Vorzugsweise ist das Halteelement als ein Rastelement ausgestaltet. Bevorzugt ist eine Rastanordnung als ein oder das Befestigungsmittel zum Verrasten des Halteelementes mit dem Anlagekörper vorgesehen. Die Rastanordnung kann beispielsweise Rasthaken, Rastnasen, Rastzungen oder dergleichen umfassen, die in entsprechende Rastaufnahmen einrasten. Die Rastanordnung umfasst also beispielsweise Rastkonturen am Halteelement, die mit Rast-Gegenkonturen an dem Anlagekörper in verrastenden Eingriff bringbar sind.

Die Rastanordnung weist zweckmäßigerweise mindestens eine Rastkontur zum Verrasten des Halteelementes mit dem Anlagekörper auf, wobei die Rastkontur eine Gleitfläche aufweist oder an einer Gleitfläche angeordnet ist, mit der das Halteelement an dem Anlagekörper zwischen dem Positionierzustand und dem Haftzustand gleitverschieblich gelagert ist. Beispielsweise kann das Halteelement mit der mindestens einen Gleitfläche (bevorzugt sind mehrere Gleitflächen vorgesehen) an der bereits erwähnten Halteelement-Aufnahme des Anlagekörpers entlang gleiten, beispielsweise der Durchtrittsöffnung, um sozusagen durch den Anlagekörper hindurch in Anlagekontakt mit der Arbeitsfläche zu gelangen und den Haftzustand herzustellen.

Die Gleitflächen sind beispielsweise an den bereits erwähnten Stützvorsprüngen oder Stützhaken vorgesehen.

Weiterhin ist es vorteilhaft, wenn das Befestigungsmittel eine Verklebung aufweist oder umfasst, mit der das Halteelement mit dem Anlagekörper verklebt ist. Hier ist wiederum eine lösbare Verklebung vorteilhaft, d.h., dass das Halteelement ohne weiteres vom Anlagekörper entfernt werden kann und gegen ein anderes, klebendes Halteelement austauschbar ist.

Bei der Verklebung des Halteelementes mit dem Anlagekörper ist es vorteilhaft, wenn die Verklebung und das Haftmittel an einander entgegengesetzten Seiten des Halteelementes angeordnet sind. Somit kann das Halteelement beispielsweise auf eine Fläche neben der Anlagefläche des Anlagekörpers geklebt werden, während das Haftmittel bzw. eine Haftoberfläche des Haftmittels mit der Anlagefläche fluchtet oder in einer Ebene mit derselben liegt. Selbstverständlich kann das Haftmittel oder eine Haftoberfläche desselben auch etwas vor die Anlagefläche vorstehen.

Bevorzugt ist es, wenn das Halteelement mindestens eine Stützkontur oder Rastkontur aufweist, mit der sich das Halteelement an einer Widerlagerkontur oder Stützkontur der Halteelement-Aufnahme in dem Positionierzustand abstützt und die durch Kraftbeaufschlagung des Halteelements in Richtung des Haftzustandes an der Widerlagerkontur oder Stützkontur der Halteelement-Aufnahme vorbei beweglich ist.

Erfindungsgemäß ist vorgesehen, dass das Haftmittel bei an der Arbeitsfläche anliegender Anlagefläche des Anlagekörpers aus einem Positionierzustand, bei dem das Haftmittel nicht in Kontakt mit der Arbeitsfläche ist und die Anlagefläche bezüglich der Arbeitsfläche positionierbar ist, in einen Haftzustand bringbar ist, bei dem das Haftmittel an der Arbeitsfläche anhaftet und den Anlagekörper an der Arbeitsfläche fixiert.

In der nachfolgenden Beschreibung wird als Positionierzustand nicht nur der oben beschriebene Positionierzustand verstanden, bei dem Haftmittel sozusagen bereits am Anlagekörper angeordnet ist, sondern auch ein solcher Zustand, bei dem das Halteelement noch gar nicht am Anlagekörper angeordnet ist, beispielsweise zu seinem Transport noch durch eine Abdeckung abgedeckt ist oder dergleichen. Der Haftzustand ist derjenige Zustand, bei dem das Halteelement an der Anlagefläche anhaftet.

In dem Haftzustand ist das Haftmittel vorzugsweise in einer Ebene mit der Anlagefläche oder steht vor die Anlagefläche vor.

Eine Haftfläche des Haftmittels und die Anlagefläche sind vorzugsweise parallel und/oder in einer Ebene, wenn das Haftmittel im Haftzustand ist.

Es versteht sich, dass die Vorrichtung nicht nur ein Halteelement, sondern mehrere, beispielsweise zwei oder drei, Halteelemente aufweisen kann. Die Halteelemente sind beispielsweise in einer Arbeitsrichtung, entlang derer das Werkzeug an dem Anlagekörper entlang führbar ist, hintereinander angeordnet. Es versteht sich, dass an dem Anlagekörper Halteelement-Aufnahmen nicht nur für ein Halteelement, sondern für mehrere, beispielsweise zwei oder drei, Halteelemente vorhanden sein können. Die Halteelemente sind beispielsweise in einer Arbeitsrichtung, entlang derer ein Werkzeug an dem Anlagekörper entlang führbar ist, hintereinander angeordnet.

Das Halteelement hat vorzugsweise eine plattenartige oder scheibenartige Gestalt.

Bevorzugt ist das Halteelement streifenförmig und/oder hat eine Längsgestalt.

Das Halteelement als Ganzes oder mindestens ein Bestandteil des Halteelements, beispielsweise ein Trägerkörper des Halteelements, das Haftmittel oder dergleichen, besteht vorzugsweise aus Kunststoff und/oder ist kompostierbar oder biologisch abbaubar.

Der Anlagekörper besteht vorzugsweise aus Metall, insbesondere Aluminium. Bei dem Anlagekörper handelt es sich vorzugsweise um einen Profilkörper und/oder ein Extrusionsprofil.

Das Halteelement weist vorteilhaft parallel verlaufende, gerade Längsseiten auf. Beispielsweise ist das Halteelement in Draufsicht rechteckig. An einem oder beiden Längsenden können die Längsseiten aber auch über einen gerundeten Abschnitt, insbesondere einen Laschenabschnitt oder Griffabschnitt miteinander verbunden sein. Es versteht sich, dass auch andere Außenumfangsgeometrien, beispielsweise runde, ovale oder polygonale Halteelemente ohne weiteres möglich sind.

Für die Ausgestaltung des Haftmittels kommen mehrere, alternative und ergänzende Variationen in Frage. Beispielsweise weist das Haftmittel eine Klebefläche zum Ankleben an die Arbeitsoberfläche auf. Das Haftmittel kann auch einen Saugabschnitt oder eine Saugkontur aufweisen. Beispielsweise kann das Haftmittel aber auch einen Saugkopf, insbesondere eine Anordnung mehrerer Saugköpfe, zum Ansaugen an die Arbeitsfläche umfassen. Die Saugköpfe können nebeneinander angeordnet sein. Prinzipiell möglich ist auch, dass das Haftmittel eine Klettschicht umfasst oder dadurch gebildet ist. Weiterhin ist es möglich, dass eine Klebefläche segmentiert ist oder dass mehrere Klebeflächen vorhanden sind. Das Haftmittel kann zum Anhaften an rauen Oberflächen, beispielsweise Holzwerkstoffen, Stein oder dergleichen ausgestaltet sein. Dazu weist das Haftmittel vorzugsweise ein Klebemittel oder eine Klebefläche auf. Vorteilhaft ist aber auch, wenn das Haftmittel an glatten Oberflächen, beispielsweise Fliesen, Glas oder dergleichen anhaften kann. Auch hier kann ein Haftmittel mit einer Klebefläche vorgesehen sein, aber auch mit einer Saugfläche, insbesondere einem Saugkopf.

Die Verklebung, d.h. die Ausgestaltung der Klebefläche, ist vorzugsweise so, dass der Klebstoff rückstandsfrei von der Arbeitsoberfläche entfernbar ist. Bevorzugt weist das Haftmittel einen Klebestreifen oder eine Klebeschicht auf. Beispielsweise wird das Haftmittel von einem rückstandsfrei entfernbaren Kleber gebildet, wie zum Beispiel in WO 92/11332 A1 oder in den darin erwähnten Referenzen beschrieben. Insbesondere ist es vorteilhaft, wenn der Kleber also keine dauerhafte Verklebung ermöglicht, sondern eine lösbare Verklebung, wie man sie beispielsweise im Zusammenhang mit Haft-Notizzetteln kennt, die rückstandsfrei und leicht vom Untergrund entfernbar sind. Selbstverständlich ist die Verklebung im vorliegenden Fall vorzugsweise etwas fester, d.h., dass das Lösen der Verklebung etwas schwerer fällt. Dennoch ist das Haftmittel vorzugsweise so ausgestaltet, dass es rückstandsfrei von der Arbeitsfläche entfernbar ist. Bevorzugt handelt es sich bei dem Haftmittel um einen sogenannten Schaumkleber.

Das Haftmittel umfasst beispielsweise eine Acrylatmasse. Zur Anhaftung des Haftmittels an einem Trägerkörper des Halteelements oder direkt an dem Anlagekörper ist beispielsweise eine modifizierte Acrylatmasse vorteilhaft, sodass das Halteelement fest an dem Trägerkörper anhaftet. Das Haftmittel umfasst vorteilhaft eine sogenannte Rein-Acrylatmasse an seiner zu der Anhaftung eine der Arbeitsfläche vorgesehenen Seite. Diese Rein-Acrylatmasse kann rückstandsfrei von der Arbeitsfläche entfernt werden.

Das Haftmittel oder das Halteelement als Ganzes kann ein Sandwich-Haftmittel sein und/oder mehrere Schichten aufweisen, beispielsweise Schichten aus verschiedenen Acrylatmassen, z.B. einer modifizierten Acrylatmasse und einer Rein-Acrylatmasse. Ferner kann eine Verstärkungsfolie, insbesondere aus Polyurethan, PET oder dergleichen, und/oder eine Schaumschicht, insbesondere aus Polyurethan-Schaum, bei dem Haftmittel oder dem Halteelement vorgesehen sein.

Bei der Arbeitsfläche handelt es sich beispielsweise um eine Werkstückoberfläche, zum Beispiel eines Holz-Werkstücks, eines Kunststoff-Werkstücks oder dergleichen. Aber auch das Anhaften an einer Wand, beispielsweise einer Gebäudewand oder Raumwand, kann auf diesem Wege ohne weiteres realisiert sein.

Grundsätzlich ist es so, dass der Anlagekörper im Positionierzustand noch ohne weiteres an der Fläche verschoben oder verstellt werden kann, d.h., dass das Haftmittel sozusagen inaktiv ist. Man kann den Positionierzustand auch als einen Inaktivzustand oder Inaktivierungszustand des Haftmittels bezeichnen. Wenn jedoch die geeignete Position des Anlagekörpers relativ zur Arbeitsfläche erreicht ist, wird das Haftmittel sozusagen aktiviert oder in einen Aktivierungszustand gebracht. Mithin wird also das Haftmittel in einen Haftzustand gebracht, bei dem das Haftmittel an der Arbeitsfläche anhaftet und somit nicht nur an der Arbeitsfläche fixiert ist, sondern auch den Anlagekörper an der Arbeitsfläche fixiert.

Zum Verstellen oder Bringen des Halteelementes aus dem Positionierzustand in den Haftzustand sind mehrere Möglichkeiten vorteilhaft:
Beispielsweise kann vorgesehen sein, dass das Halteelement an einer bezüglich der Anlagefläche beweglichen, beispielsweise schwenkbeweglichen, schiebebeweglichen oder dergleichen Partie des Anlagekörpers angeordnet ist, so dass durch eine Betätigung der beweglichen Partie das Haftmittel aus dem Positionierzustand in den Haftzustand verstellbar ist. Die bewegliche Partie kann aber auch eine biegeflexible Partie des Anlagekörpers sein. So kann beispielsweise an dem Anlagekörper im Bereich der Arbeitsfläche oder neben der Arbeitsfläche ein biegeflexibler Abschnitt oder Vorsprung vorgesehen sein, an dem das Haftmittel angeordnet ist. Mithin bildet also der Anlagekörper sozusagen selbst einen Bestandteil des Halteelements oder jedenfalls ein Betätigungsorgan für dasselbe.

Es ist aber auch möglich, dass die Vorrichtung eine Lagereinrichtung zum beweglichen Lagern des Halteelementes aufweist, beispielsweise zum Verstellen des Halteelementes aus dem Positionierzustand in den Haftzustand oder aus dem Haftzustand in den Positionierzustand. Es ist aber auch möglich, dass die Lagereinrichtung dazu dient, dass das Halteelement und der Anlagekörper relativ zueinander positionierbar sind. Mithin ist es also beispielsweise möglich, dass das Halteelement verschieblich in einer Ebene parallel zur Anlagefläche an dem Anlagekörper gelagert ist, so dass der Anlagekörper relativ zu dem Halteelement, wenn dieses bereits an der Arbeitsfläche anhaftet, beweglich ist.

Wenn eine Lagereinrichtung vorgesehen ist, ist vorzugsweise eine Fixiereinrichtung zum Fixieren des Halteelementes und des Anlagekörpers zueinander vorgesehen, beispielsweise eine Klemmeinrichtung, Rasteinrichtung oder dergleichen. Dann kann zum Beispiel der Anlagekörper relativ zum Halteelement fixiert werden, so dass er seine Position beibehält.

Das Halteelement ist zweckmäßigerweise an der Lagereinrichtung zu einem Schwenken des Haftmittels zu der Anlagefläche oder Arbeitsfläche hin in den Haftzustand und/oder von der Anlagefläche oder Arbeitsfläche weg im Sinne eines Lösens des Haftmittels von der Arbeitsfläche schwenkbar gelagert. So ist es beispielsweise möglich, dass der Anlagekörper an der Arbeitsfläche positioniert wird, anschließend das Halteelement in Richtung des Haftzustandes verschwenkt wird, so dass die Gesamtkonfiguration umfassend den Anlagekörper und das Halteelement fest an der Arbeitsfläche fixiert sind. Auch für einen Lösevorgang ist diese Schwenklagerung vorteilhaft. So kann beispielsweise das Haftmittel in einem Art Abschälvorgang von der Arbeitsfläche weggeschwenkt werden, so dass das Halteelement und mithin auch der Anlagekörper von der Arbeitsfläche frei kommen.

Die Lagereinrichtung kann aber auch ein Schiebelager umfassen, an dem das Halteelement zu der Anlage hin verschieblich gelagert ist. Eine Schieberichtung oder eine Schiebeachsrichtung des Schiebelagers ist vorzugsweise orthogonal zu der Anlagefläche. So ist es beispielsweise möglich, dass das Haftmittel eine Haftfläche aufweist, die parallel zur Anlagefläche orientiert ist. Die Lagereinrichtung ermöglicht vorzugsweise eine Parallelverschiebung der Haftfläche in Richtung der Anlagefläche, um einen Haftkontakt mit der Arbeitsfläche herzustellen. Beispielsweise kann eine Klebefläche als Haftfläche ausgestaltet sein. Es ist aber auch möglich, dass die Haftfläche beispielsweise durch eine Außenumfangskontur eines Saugabschnittes, insbesondere eines freien Bereiches eines Saugkopfes, definiert ist. Wenn mehrere Haftflächen vorhanden sind, sind diese vorzugsweise in oder an einer Umhüllenden-Fläche oder Umhüllenden-Ebene vorgesehen.

Das Halteelement ist biegeflexibel. Beispielsweise kann das Halteelement in einer oder mehreren Richtungen biegeflexibel sein oder biegeflexible Abschnitte aufweisen. Das Halteelement kann mindestens einen biegesteifen und mindestens einen biegeflexiblen Abschnitt aufweisen. Für eine Biegesteifigkeit sind beispielsweise eine oder mehrere Verstärkungsrippen und/oder eine plattenartige Gestalt des Halteelements oder Trägerkörpers oder dergleichen vorteilhaft. Für die biegeflexible Eigenschaft eignet sich beispielsweise ein entsprechend biegeflexibles Material des Halteelements oder Trägerkörpers, z.B. Kunststoff, und/oder Verformungsaussparungen am Halteelement oder dergleichen.

Erfindungsgemäß ist vorgesehen, dass das Halteelement zu einer Verstellung zwischen dem Positionierzustand und dem Haftzustand biegeflexibel ist. So kann beispielsweise das Halteelement in einer Art Rollbewegung oder Abwicklungsbewegung aus dem Positionierzustand in den Haftzustand gebracht werden. Das Haftmittel ist dabei sofort aktiv, d.h. es wird sozusagen sequentiell oder in einem fließenden Vorgang in haftenden Kontakt mit der Arbeitsfläche gebracht oder ist durch die Biegeflexibilität des Halteelementes in den Haftzustand bringbar.

Da das Halteelement biegeflexibel ist, ist die nachfolgende Ausgestaltung vorteilhaft:
Das Halteelement ist vorteilhaft in einem Stützzustand, bei dem das Halteelement partiell, beispielsweise an einem oder beiden seiner Längsenden, an dem Anlagekörper abgestützt ist, aus dem Positionierzustand in den Haftzustand verformbar. Beispielsweise kann sich das Halteelement zwischen seinen Längsenden von der Anlagefläche weg wölben, was dem Positionierzustand entspricht. Durch Druck in einen Abschnitt zwischen den Längsenden in Richtung der Anlagefläche ist das Halteelement in den Haftzustand bringbar oder verformbar, bei der dann das Haftmittel in einer Ebene mit der Anlagefläche ist.

Das Halteelement ist vorteilhaft im Sinne eines Aufrollens oder Abwickelns des Haftmittels in Richtung zu der Arbeitsfläche rollbar oder abwickelbar. Beispielsweise kann das Halteelement als Ganzes oder ein das Haftmittel umfassender oder aufweisender Haftkörper sozusagen auf die Arbeitsfläche aufgerollt werden. Somit kann beispielsweise das Halteelement von dem Positionierzustand in den Haftzustand verbracht werden. Es ist aber auch möglich, dass eine derartige Rollbewegung beispielsweise zum Lösen des Halteelementes von der Arbeitsfläche genutzt wird. Mithin ist das Halteelement im Sinne eines Aufwickelns oder Aufrollens oder Abschälens des Haftmittels von der Arbeitsfläche weg vorteilhaft rollbar aufwickelbar.

Die Erfindung sieht vor, dass das Halteelement quer zu seiner Längserstreckung oder quer zu einer zum Wickeln oder Rollen des Halteelements vorgesehenen Rollrichtung mindestens eine Aussparung und/oder mindestens einen Querversteifungskörper, insbesondere eine Querrippe, aufweist. Bevorzugt erstreckt sich die Querrippe und/oder der Querversteifungskörper und/oder die Aussparung über die gesamte Querbreite des Halteelements. Die Aussparung erleichtert eine Wickelbetätigung oder Biegebetätigung des Halteelements in Richtung des Haftzustands oder aus dem Haftzustand heraus. Die Querrippe oder der Querversteifungskörper verstärken das Halteelement quer zu seiner Längserstreckung.

Das Haftmittel kann in dem Positionierzustand frei liegen. Somit kann beispielsweise durch eine Verstellung des Haftmittels oder dessen Haftoberfläche in Richtung der Anlagefläche oder der Arbeitsfläche der Haftzustand erzielt werden. Selbstverständlich ist es vorteilhaft, wenn auch ein derartiges Haftmittel beispielsweise zu Transportzwecken geschützt ist, insbesondere durch die nachfolgend erläuterte Abdeckung. Diese Abdeckung kann beispielsweise bereits im Positionierzustand von dem Haftmittel entfernt werden, so dass dieses im Prinzip zur Herstellung des Haftkontaktes unmittelbar bereitsteht. Es ist aber auch möglich, dass das Haftmittel in dem Positionierzustand durch eine Abdeckung abgedeckt ist, die von dem Haftmittel zu einem Verbringen in den Haftzustand entfernbar ist.

Die Abdeckung ist beispielsweise folienartig oder flächig. Vorteilhaft ist es, wenn die Abdeckung eine Abdeckfolie umfasst. Weiterhin ist es zweckmäßig, wenn die Abdeckung das Haftmittel vollständig überdeckt. Somit ist das Haftmittel sozusagen inaktiv so lange die Abdeckung auf der Haftoberfläche oder dem Haftmittel angeordnet ist.

Die Abdeckung weist zweckmäßigerweise einen das Haftmittel abdeckenden Abdeckabschnitt und einen durch einen Bediener in den Positionierzustand manuell betätigbaren Betätigungsabschnitt auf, anhand dessen der Abdeckabschnitt, beispielsweise durch eine Zugbetätigung, von dem Haftmittel entfernbar und in den Haftzustand bringbar ist. An dem Betätigungsabschnitt befindet sich beispielsweise ein Handgriff oder Griffabschnitt. Der Betätigungsabschnitt als Ganzes kann auch einen Griffabschnitt darstellen. Beispielsweise ist der Griffabschnitt in der Art einer Haltezunge oder Greifzunge zum Ergreifen ausgestaltet. Der Griffabschnitt kann beispielsweise zwischen zwei Finger des Bedieners geklemmt werden, um ihn zu betätigen.

Der Griffabschnitt des Betätigungsabschnittes steht beispielsweise seitlich vor den Anlagekörper und/oder durch eine Aussparung des Anlagekörpers zu einem Ergreifen durch den Bediener vor, wenn das Halteelement an dem Anlagekörper angeordnet oder befestigt ist und/oder der Anlagekörper bereits an der Arbeitsfläche angeordnet ist. So kann beispielsweise eine Art Fenster oder dergleichen andere Aussparung am Anlagekörper vorgesehen sein, durch den der Betätigungsabschnitt oder Griffabschnitt vorsteht, so dass ihn der Bediener ergreifen kann.

Weiterhin vorteilhaft ist es, wenn der Griffabschnitt vor eine das Haftmittel aufweisenden oder tragenden Tragkörper des Halteelements, beispielsweise dessen Längsendbereich, vorsteht.

In dem Positionierzustand ist es vorteilhaft, wenn zumindest ein Teil des Betätigungsabschnittes an dem Abdeckabschnitt anliegt, beispielsweise flächig anliegt. Weiterhin vorteilhaft ist es, wenn die Abdeckung mindestens einen Umlenkabschnitt zwischen dem Betätigungsabschnitt und dem Abdeckabschnitt aufweist. Beides ist in Kombination möglich. So können beispielsweise der Betätigungsabschnitt und der Abdeckabschnitt an einander anliegen und über den Umlenkabschnitt miteinander verbunden sein. So ist beispielsweise eine Art Abschälen oder Abziehen des Abdeckabschnittes ohne weiteres möglich, beispielsweise durch eine Zugbetätigung des Betätigungsabschnittes.

Der Abdeckabschnitt kann also vom Haftmittel auf diesem Wege abgezogen werden. Vorteilhaft ist diese Konfiguration insbesondere daher, weil die Abdeckung im Sinne eines Abschälens oder Abwickelns von dem Haftmittel entfernbar ist. Dieses kann sozusagen sequentiell oder nach und nach in den Haftzustand gebracht werden. Der Betätigungsabschnitt und der Abdeckabschnitt sind vorzugsweise aus demselben Material, insbesondere folienartig. Somit kann beispielsweise das Haftmittel bereits an der Arbeitsfläche anliegen, so lange es noch im Positionierzustand ist. Dann kann der Bediener durch eine Betätigung des Betätigungsabschnittes die Abdeckung von dem Haftmittel entfernen, beispielsweise abziehen, abschälen oder dergleichen. Dabei ist es möglich, dass der bereits erwähnte Umlenkabschnitt sozusagen an der Oberfläche, insbesondere Haftoberfläche, des Haftmittels entlang rollt oder wandert.

Ein das Haftmittel tragender oder bildender Haftkörper des Halteelements weist zweckmäßigerweise einen durch einen Bediener in dem Haftzustand manuell betätigbaren Handhabungsabschnitt auf, der beispielsweise durch den Bediener ergreifbar ist. Anhand des Handhabungsabschnittes ist der Haftkörper zu einem Verbringen des Haftmittels aus dem Haftzustand in einen von der Arbeitsfläche des Werkstücks entfernten Lösezustand betätigbar. Somit kann der Haftkörper sozusagen als Ganzes abgezogen werden. Eine derartige Betätigung ist vorzugsweise möglich, wenn der Anlagekörper an der Arbeitsfläche anliegt und/oder wenn dieser von der Arbeitsfläche entfernt ist.

Das Haftmittel erstreckt sich zweckmäßigerweise entlang einer Längsachse des Haftkörpers. Der Haftkörper ist vorteilhaft in Richtung seiner Längsachse durch eine Zug-Betätigung des Handhabungsabschnittes zu einem Lösen des Haftmittels von der Arbeitsfläche dehnbar. Durch Dehnung des Haftmittels ist vorzugsweise eine Anhaftung des Haftmittels an der Arbeitsfläche veränderbar oder aufhebbar.

Der Handhabungsabschnitt des Haftkörpers steht vorteilhaft seitlich vor den Anlagekörper und/oder durch eine Aussparung des Anlagekörpers zu einem Ergreifen durch den Bediener vor, wenn das Halteelement an dem Anlagekörper angeordnet oder befestigt ist. Insbesondere ist der Handhabungsabschnitt in dieser Situation auch dann durch den Bediener ergreifbar, wenn der Anlagekörper an der Arbeitsfläche anliegt. Somit kann also die Haftung der Gesamtvorrichtung an der Arbeitsfläche gelöst werden, indem der Haftkörper sozusagen betätigt wird, beispielsweise gedehnt wird. Es ist aber auch möglich, dass der Haftkörper in Art einer Abschäl-Bewegung oder Abroll-Bewegung von dem Werkstück oder der Wand bzw. dessen Arbeitsfläche gelöst wird.

Der Griffabschnitt des Abdeckelementes und der Handhabungsabschnitt des Haftkörpers sind beispielsweise an einander entgegengesetzten Seiten des Halteelementes angeordnet. Wenn der Griffabschnitt und der Handhabungsabschnitt an derselben Seite des Halteelements angeordnet sind, beispielsweise am selben Längsende, stellt dies eine weitere Option dar. Insbesondere dann ist es vorteilhaft, wenn die beiden Komponenten Handhabungsabschnitt und Griffabschnitt des Abdeckelementes unterschiedlich weit vor das Halteelement vorstehen, so dass sie nacheinander ergreifbar sind. Insbesondere vorteilhaft ist es, wenn der Griffabschnitt des Abdeckelementes weiter vor das Halteelement vorsteht als der Handhabungsabschnitt des Haftkörpers.

Vorteilhaft ist vorgesehen, dass das Haftmittel durch Verstellung des Halteelements bezüglich des Anlagekörpers, z.B. durch Verstellung des Halteelements in oder an der oder einer zur Aufnahme des Halteelements vorgesehenen Halteelement-Aufnahme, z.B. einer Aussparung, des Anlagekörpers zwischen dem Positionierzustand und dem Haftzustand verstellbar ist, z.B. aus dem Positionierzustand in den Haftzustand oder aus dem Haftzustand in den Positionierzustand bringbar ist.

Es ist weiterhin vorteilhaft vorgesehen, dass das Haftmittel durch Einbringen des Halteelements in eine zur Aufnahme des Halteelements vorgesehene Halteelement-Aufnahme, insbesondere eine Aussparung, des Anlagekörpers aus dem Positionierzustand in den Haftzustand bringbar ist. Beispielsweise ist das Halteelement in die Halteelement-Aufnahme einsteckbar, um es vom Positionierzustand in den Haftzustand zu verstellen.

Vorzugweise ist vorgesehen, dass das Halteelement mindestens eine Stützkontur oder Rastkontur zum Abstützen des Halteelements an einer Widerlagerkontur in dem Positionierzustand aufweist, wobei die Stützkontur oder Rastkontur zum Verstellen des Halteelements in Richtung des Haftzustands an der Widerlagerkontur der Halteelement-Aufnahme vorbei bewegbar ist. Anhand der Rastkontur oder Stützkontur kann das Halteelement an der Widerlagerkontur der Halteelement-Aufnahme abgestützt sein, wobei das Halteelement bereits in der Halteelement-Aufnahme aufgenommen ist, jedoch noch nicht im Positionierzustand ist. Man kann diesen Zustand auch als einen Vorpositionierzustand bezeichnen. Das Halteelement ist anhand der Stützkontur oder Rastkontur vorteilhaft formschlüssig an der Halteelement-Aufnahme gehalten, jedoch das Haftmittel noch nicht im Haftzustand. Der Bediener kann doch eine weitere Bedienhandlung, beispielsweise durch einen Druck auf das Halteelement in Richtung der Anlagefläche des Anlagekörpers, das Halteelement oder Haftmittel vom Positionierzustand in den Haftzustand verstellen.

Vorteilhaft ist es, wenn das Halteelement eine Betätigungshandhabe aufweist, mit der das Haftmittel durch eine Bedienbetätigung, insbesondere eine Druckbetätigung in Richtung der Anlagefläche oder eine Zugbetätigung eines Bedieners aus dem Positionierzustand in den Haftzustand bringbar ist. Die Betätigungshandhabe kann beispielsweise an einer zu dem Haftmittel entgegengesetzten Seite des Haftelements angeordnet sein. Beispielsweise kann die Betätigungshandhabe an der Oberseite des Haftelements angeordnet oder durch die Oberseite des Haftelements gebildet sein. Die Betätigungshandhabe kann aber auch beispielsweise eine Zuglasche oder dergleichen anderes Betätigungselement umfassen.

Bei der Ausgestaltung und/oder Anordnung der Betätigungshandhabe sind mehrere Möglichkeiten gegeben, beispielsweise dass die Betätigungshandhabe seitlich vor den Anlagekörper vorsteht und/oder von einer zu der Anlagefläche des Anlagekörpers abgewandten, insbesondere entgegengesetzten Seite des Anlagekörpers für die Bedienbetätigung zugänglich ist, wenn das Halteelement an dem Anlagekörper angeordnet, insbesondere in einer Halteelement-Aufnahme des Anlagekörpers angeordnet ist.

Eine weitere Möglichkeit zur Befestigung des Halteelementes an dem Untergrund ist durch folgende Maßnahme gegeben:
Das Halteelement weist vorteilhaft eine oder mehrere Durchtrittsöffnungen für einen Befestigungsbolzen, zum Beispiel eine Schraube oder einen Nagel, auf, mit dem das Halteelement mit der Arbeitsoberfläche verbindbar ist. An dieser Stelle sei erwähnt, dass diese Ausgestaltung eines Halteelements, welches lösbar anhand von Formschluss-Befestigungsmitteln an einem Führungskörper für eine Werkzeugmaschine oder als Bestandteil einer Werkzeugmaschine, zum Beispiel einer Führungsschiene für eine Werkzeugmaschine oder einem Führungskörper einer Werkzeugmaschine, zum Beispiel einem Stützfuß, befestigt ist, beispielsweise verrastet, anhand einer Steckverbindung verbunden oder dergleichen, eine an sich eigenständige Erfindung darstellt. Ein Haftmittel, beispielsweise eine Verklebung, ein Saugmittel oder dergleichen, zum lösbaren Anhaften an die Arbeitsfläche ist in diesem Fall bei dem Halteelement zwar optional möglich, jedoch nicht notwendig. Insbesondere dann, wenn das Halteelement bei bereits an der Arbeitsfläche anliegendem Anlagekörper, insbesondere bei bereits an der Arbeitsfläche anliegendem Führungskörper, an dem Anlagekörper oder Führungskörper lösbar befestigbar ist und anschließend das Halteelement anhand eines Nagels oder sonstigen Befestigungsbolzens mit der Arbeitsfläche verbindbar ist, stellt dies eine an sich eigenständige Erfindung dar, kann aber auch eine Verbesserung oder Ausgestaltung der eingangs genannten Erfindung sein.

Der Anlagekörper bildet vorzugsweise einen Führungskörper, beispielsweise für die Werkzeugmaschine oder ein Werkstück. Der Anlagekörper weist für die Funktion als Führungskörper vorzugsweise mindestens eine Führungskontur, zum Beispiel einen sich entlang seiner Längserstreckung erstreckenden Führungsvorsprung, auf. Der Führungskörper kann aber auch ein die Werkzeugmaschine verschieblich, schwenkbar oder beides an dem Führungskörper lagerndes Maschinenlager aufweisen oder umfassen. Das Maschinenlager kann beispielsweise ein Schwenklager aufweisen. Das Maschinenlager kann aber auch eines oder mehre sich quer, beispielsweise senkrecht zu der Anlagefläche erstreckende Führungselemente, insbesondere mindestens eine Führungsstange, aufweisen oder umfassen. Beispielsweise bildet das mindestens eine Führungselement einen Teil eines Linearlagers, mit dem die Werkzeugmaschine in Richtung zu der Anlagefläche und somit zum Werkstück oder der Wand hin oder vom Werkstück weg oder von der Wand weg bewegbar ist.

Der Anlagekörper kann beispielsweise ein Führungskörper, beispielsweise ein Lineal oder dergleichen, für ein manuell betätigbares Werkzeug, insbesondere ein Schneidwerkzeug, zum Beispiel einen Anritzer, einen Glasschneider oder dergleichen sein.

Weiterhin ist es möglich, dass der Anlagekörper ein Bestandteil einer Werkzeugmaschine bildet, beispielsweise eines Arbeitstisches, mit dem die Werkzeugmaschine auf der Arbeitsoberfläche anordenbar ist. Das Halteelement sorgt für einen festen Halt des Führungskörpers an der Arbeitsoberfläche.

Die Werkzeugmaschine und der Anlagekörper können auch voneinander separate Komponenten sein, die nur für den Arbeitsbetrieb, beispielsweise zum Einbringen eines Sägeschnittes in das Werkstück, miteinander in Kontakt gebracht werden.

Der Führungskörper kann auch eine Führungsschiene bilden, deren Unterseite die Anlagefläche des Anlagekörpers aufweist oder bildet und deren zu der Unterseite entgegengesetzte Oberseite eine Gleitfläche zum Verschieben der Werkzeugmaschine aufweist. An oder neben der Gleitfläche ist eine, z.B. die bereits erwähnte, langgestreckte Führungskontur, beispielsweise eine Führungsnut oder ein Führungsvorsprung oder eine Führungsrippe, vorteilhaft. Somit kann die Führungsschiene sozusagen eine Gleitschiene für die Werkzeugmaschine darstellen..

Bevorzugt ist weiterhin ein System umfassend den Anlagekörper sowie eine Werkzeugmaschine. Der Anlagekörper kann einen Bestandteil der Werkzeugmaschine bilden, beispielsweise einen Führungstisch, einen Ständer oder dergleichen.

An dem Anlagekörper können Haltemittel, beispielsweise Winkelflächen, Stützflächen oder dergleichen, zum Fixieren eines weiteren Gegenstandes zum Aufhängen eines Gegenstandes oder dergleichen vorgesehen sein.

Der Anlagekörper kann plattenartig sein. Der Anlagekörper kann eine Führungsschiene sein oder umfassen.

Der Anlagekörper kann aber auch mindestens zwei zueinander winkelige Schenkel aufweisen, wobei an mindestens einem der Schenkel ein Halteelement der vorgenannten Art angeordnet oder anordenbar ist. Beispielsweise ist an einem der Schenkel eine Aufnahme, insbesondere eine Lageraufnahme oder eine Halteaufnahme, für das Halteelement vorgesehen. Der Anlagekörper kann auch mehrere, zueinander winkelige Schenkel aufweisen. Beispielsweise können die Schenkel eine U-förmige Konfiguration bilden. Weiterhin kann der Anlagekörper einen Grundschenkel aufweisen, an dem das Halteelement angeordnet oder anordenbar ist, von dem ein Seitenschenkel oder zwei Seitenschenkel abstehen. Von einem der Seitenschenkel steht weiterhin vorteilhaft ein weiterer Seitenschenkel ab, vorzugsweise parallel zu dem Grundschenkel des Anlagekörpers.

Bei der Werkzeugmaschine kann es sich beispielsweise um eine Säge, insbesondere eine Kreissäge, Tauchsäge, Stichsäge oder dergleichen handeln. Die Werkzeugmaschine kann aber auch eine Bohrmaschine, Fräsmaschine, insbesondere eine Oberfräse oder dergleichen sein. Die Werkzeugmaschine ist vorzugsweise eine Hand-Werkzeugmaschine. Die Werkzeugmaschine weist einen Antriebsmotor, beispielsweise einen elektrischen Antriebsmotor, zum Antreiben einer Werkzeugaufnahme auf, an der ein Arbeitswerkzeug, beispielsweise ein Sägeblatt, ein Bohrkopf, ein Fräskopf oder dergleichen, angeordnet oder anordenbar ist.

Nachfolgend werden Ausführungsbeispiele der Erfindung anhand der Zeichnung erläutert. Es zeigen:
- Figur 1: eine perspektivische Schrägansicht einer Vorrichtung mit einem Anlagekörper und zwei Halteelementen in Ausgestaltung eines Führungskörpers für eine Werkzeugmaschine,
- Figur 2: eine Detailvergrößerung D1 aus Figur 1 mit dem Halteelement im teilweise von dem Anlagekörper entfernten Zustand,
- Figur 3: einen Längsschnitt entlang einer Schnittlinie A-A in Figur 2,
- Figur 4: eine Ansicht auf das Detail D1 gemäß Figur 1 mit einem Halteelement, welches noch in einem Positionierzustand ist,
- Figur 5: eine Schnittansicht entlang einer Schnittlinie B-B in Figur 4,
- Figur 6: das Detail gemäß Figuren 3 oder 5 mit dem Halteelement, welches bereits im Haftzustand ist,
- Figur 7: einen Querschnitt durch den Anlagekörper sowie das Halteelement gemäß Figur 1 entlang einer Schnittlinie C-C in Figur 1,
- Figur 8: ein Detail D2 aus Figur 7,

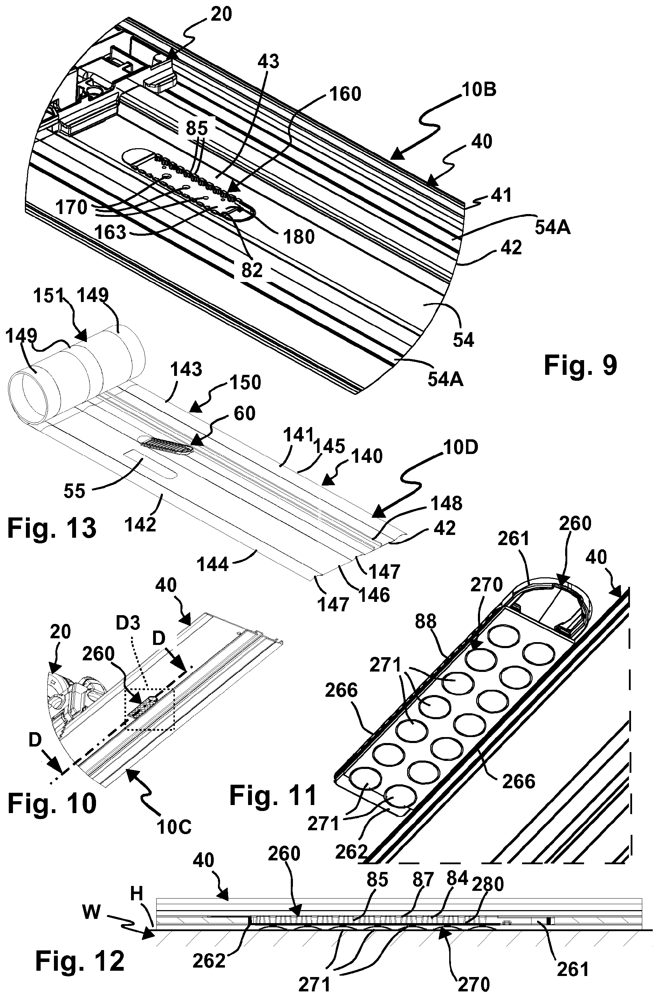

- Figur 9: eine Detailansicht etwa entsprechend dem Detail D1 mit einem alternativen Halteelement, welches mit dem Untergrund mit Nägeln befestigbar ist,
- Figur 10: eine Ansicht von unten auf eine Anordnung etwa entsprechend Figur 1, wobei das Halteelement Saugmittel aufweist,
- Figur 11: eine Detailvergrößerung etwa entsprechend einem Detail D3 in Figur 10,
- Figur 12: eine Schnittdarstellung etwa entlang einer Schnittlinie D-D in Figur 10 des Halteelementes sowie des Anlagekörpers,
- Figur 13: einen Anlagekörper in Gestalt einer rollbaren Führungsschiene mit einem Halteelement entsprechend etwa der Anordnung gemäß Figur 1,

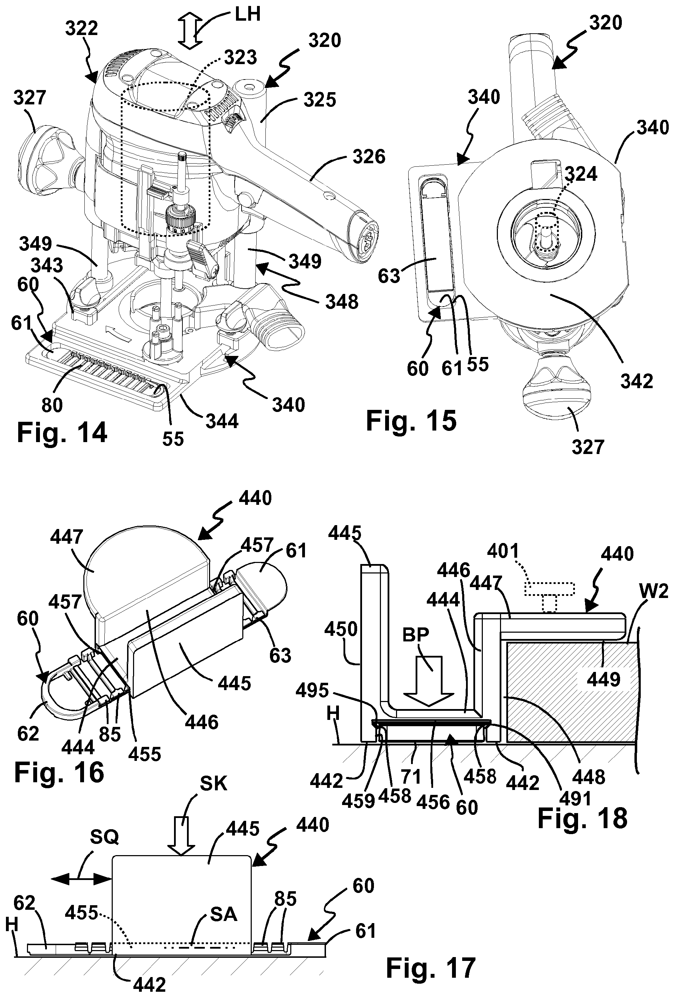

- Figur 14: einen Anlagekörper als Bestandteil einer Werkzeugmaschine mit einem Halteelement entsprechend Figur 1,
- Figur 15: die Werkzeugmaschine gemäß Figur 14 von unten,
- Figur 16: einen weiteren Anlagekörper mit dem Halteelement gemäß Figur 1, der in
- Figur 17: von seiner Längsseite und in
- Figur 18: von seiner Stirnseite dargestellt ist,

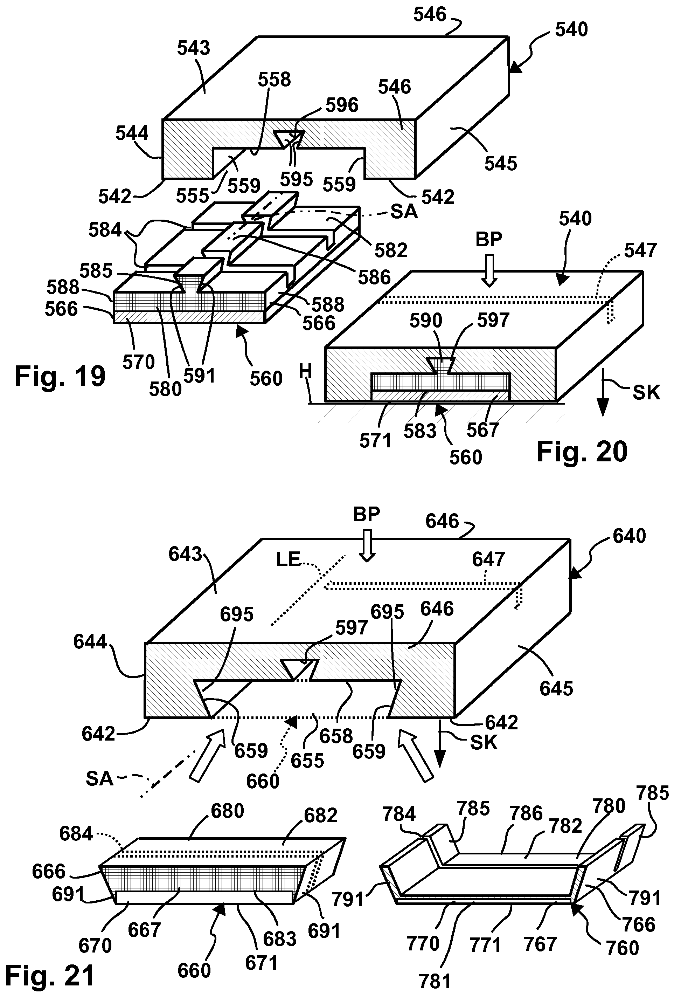

- Figur 19: eine schematische Darstellung mit einem Halteelement, welches eine Schwalbenschwanzkontur zum Eingriff in eine Schwalbenschwanz-Aufnahme eines Anlagekörpers aufweist im noch nicht aneinander montierten Zustand,
- Figur 20: den Anlagekörper mit montiertem Halteelement gemäß Figur 19,
- Figur 21: eine schematische Darstellung eines weiteren Anlagekörpers, an den wahlweise zwei ebenfalls in Figur 21 dargestellte alternative Halteelemente montierbar sind,

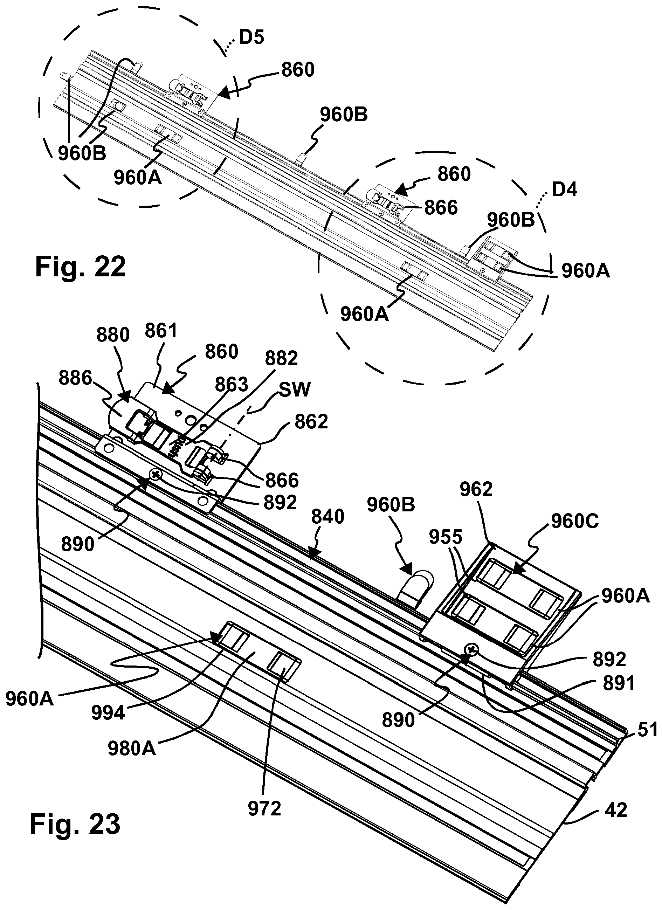

- Figur 22: eine perspektivische Darstellung eines Anlagekörpers in Gestalt einer Führungsschiene, an dem verschiedene Varianten von Halteelementen angeordnet sind und von dem in
- Figur 23: ein Detail D4 dargestellt ist,

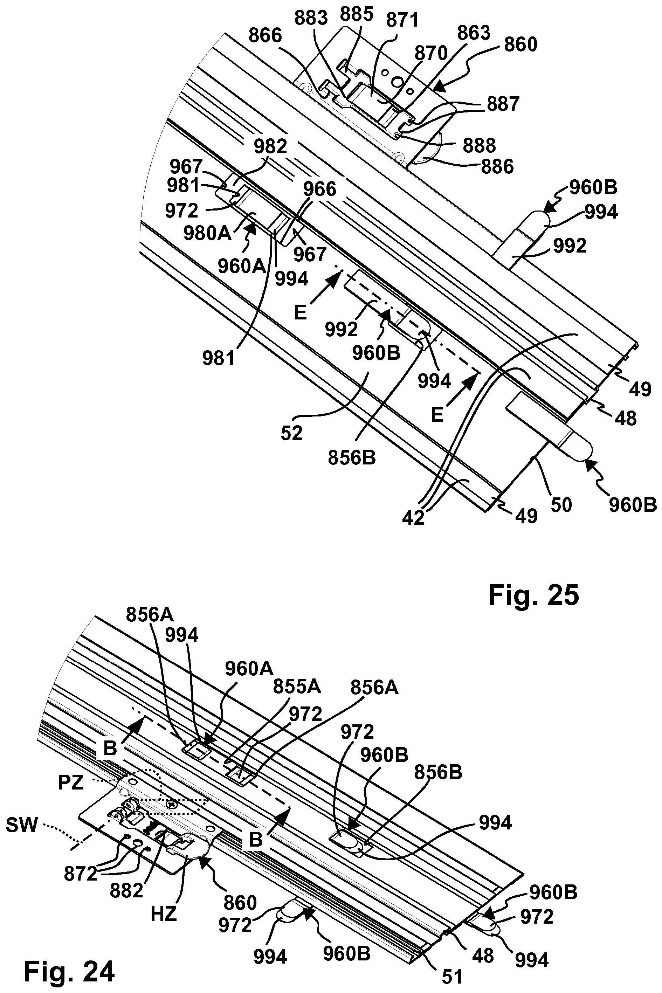

- Figur 24: ein Detail D5 der Führungsschiene gemäß Figur 22,
- Figur 25: eine untere Ansicht des Details gemäß Figur 24,
- Figur 26: eine perspektivische Darstellung eines Halteelements, welches in
- Figur 27: mit teilweise entferntem Deckelement dargestellt ist,
- Figur 28: einen Schnitt entlang einer Schnittlinie E-E durch ein Halteelement gemäß Figur 25,
- Figur 29: die Ansicht gemäß Figur 28, wobei ein Abdeckelement teilweise entfernt ist,
- Figur 30: die Ansicht gemäß Figuren 28, 29, wobei das Abdeckelement vollständig entfernt und der Haftzustand erreicht ist, und
- Figur 31: die Konfiguration gemäß Figuren 28-30, wobei ein Haftkörper des Halteelementes zumindest teilweise entfernt ist.

Ein System 10A umfasst eine Werkzeugmaschine 20, die ein Führungselement 21 sowie eine Antriebseinheit 22, die an dem Führungselement 21 angeordnet, insbesondere schwenkbar gelagert, ist, aufweist. Die Antriebseinheit 22 weist einen Antrieb 23 auf, beispielsweise einen Antriebsmotor, der direkt oder über ein in der Zeichnung nicht dargestelltes Getriebe ein Arbeitswerkzeug 24, zum Beispiel ein Sägeblatt, antreibt.

Nun ist es möglich, dass Führungselement 21 direkt auf einem Werkstück W zu positionieren oder entlang zu führen, um beispielsweise einen Sägeschnitt in eine Arbeitsfläche H einzubringen. Allerdings ist die Genauigkeit bei der einer derartigen Werkstückbearbeitung nicht optimal.

Daher ist vorgesehen, die Werkzeugmaschine 20 an einer Vorrichtung 30, die insoweit eine Führungsvorrichtung bildet, entlang zu führen, die beispielsweise einen Anlagekörper 40 in Gestalt einer Führungsschiene 41 aufweist. Die Führungsschiene 41 und somit der Anlagekörper 40 weist eine zur Anlage an der Arbeitsfläche H vorgesehene Anlagefläche 42 sowie eine zur Anlagefläche 42 entgegengesetzte Oberseite 43 auf, an der das Führungselement 21 und somit die Werkzeugmaschine 20, vorliegend eine Säge, entlang führbar ist. Der Anlagekörper 40 ist plattenartig und weist schmale Längsseiten 44, 45 sowie Stirnseiten oder Längsendseiten 46 auf.

Auch ein schematisch dargestelltes, manuell betätigbares oder führbares oder haltbares Werkzeug 120, welches ein Arbeitswerkzeug 121 aufweist, beispielsweise ein Ritz-Werkzeug, ist an dem Anlagekörper 40 führbar oder abstützbar.

An der Oberseite 43, beispielsweise einer Gleitfläche, ist weiterhin ein Führungsvorsprung 48A vorgesehen, also eine Führungskontur 48 zum Führen der Werkzeugmaschine 20 entlang einer Längserstreckung L des Anlagekörpers 40. Beispielsweise greift der Führungsvorsprung 48A, in eine Führungsaufnahme 25 am Führungselement 21 ein. Der Führungsvorsprung 48A ist beispielsweise eine Längsrippe, die Führungsaufnahme 25 eine Längsnut.

Die Führungskontur 48 steht vor einen Plattenabschnitt 54 des Anlagekörpers 40 vor.

Beispielsweise können die Werkzeugmaschine 20 und/oder das Werkzeug 120 entlang einer Arbeitsrichtung AR oder der Längserstreckung L an dem Anlagekörper 40 entlang geführt werden, insbesondere unter Abstützung oder Führung an der Führungskontur 48 oder dem Führungsvorsprung 48A.

Neben der Führungskontur 48, insbesondere im Bereich des Plattenabschnitts 54, sind insbesondere streifenförmige Führungsflächen 54A vorgesehen, die sich entlang der Längserstreckung L des Anlagekörpers 40 erstrecken und auf denen das Führungselement 21 der Werkzeugmaschine 20 bei einer Bewegung entlang der Längserstreckung L entlang gleitet.

An der Längsseite 44 wird das Arbeitswerkzeug 24 entlang geführt. An der Längsseite 44 ist beispielsweise eine Lippe 47 vorgesehen, die einen Splitterschutz darstellt und vorzugsweise bei einem ersten Sägeschnitt mit dem Arbeitswerkzeug 25 abgeschnitten wird.

Eine der Arbeitsfläche H zugewandte oder zugeordnete Auflagefläche der Lippe 47 liegt auf der Arbeitsfläche H auf, wenn der Anlagekörper 40 auf dem Werkstück W abgelegt wird. Des Weiteren stützt sich der Anlagekörper 40 und somit die Führungsschiene 41 mit Auflageelementen 49, beispielsweise Streifen aus Gummi oder dergleichen anderem elastischem Material, auf der Arbeitsfläche H ab. Die Auflageflächen der Auflageelemente 49 sowie der Lippe 47 bilden die Anlagefläche 42 des Anlagekörpers 40.

Die Auflageelemente 49 sowie die Lippe 47 sind an einem Profilkörper 50 angeordnet, an dem die Führungskontur 48 sowie die Oberseite 43 bzw. die Gleitseite der Führungsschiene 41 ausgebildet sind. Der Profilkörper 50 kann noch weitere Profilkonturen zur Führung oder Abstützung der Werkzeugmaschine 20 aufweisen, auf die aber nicht näher eingegangen wird.

Vorteilhaft ist an der Längsseite 45 des Anlagekörpers 40 noch eine Aufnahme 51 vorgesehen, die beispielsweise als Halteaufnahme für noch zu beschreibende Halteelemente, beispielsweise eine Halterung 861 für ein derartiges Halteelement, geeignet ist. Die Halterung 861 ist anhand eines in die Aufnahme 51 einführbaren und/oder eingreifenden Klemmkörpers 891, Beispielweise in der Art eines Nutensteins, gehalten, der in der Aufnahme 851 mit einer Klemmschraube 892 verklemmbar ist. Die Aufnahme 51 ist eine langgestreckte Aufnahmenut, sodass die Halterung 861 bzw. das Halteelement entlang der Längserstreckung L des Anlagekörpers 40 in verschiedene Längspositionen verschiebbar ist.

Zwar ist die Anlagefläche 42 vorteilhaft reibschlüssig, d. h. dass der Anlagekörper 40 an der Arbeitsfläche H aufgrund der relativ weichen und/oder anhaftenden Anlagefläche 42 mit einer vorbestimmten Reibkraft oder Haltekraft gehalten ist. Allerdings können gerade bei der Herstellung eines Sägeschnittes in das Werkstück W erhebliche Kräfte auftreten, sodass der sodass der Anlagekörper 40 an der Arbeitsfläche H rutscht. Zur Abhilfe sind folgende Maßnahmen vorgesehen:
Der Anlagekörper 40 kann bei Bedarf mit Halteelementen 60 versehen werden, die jeweils ein Haftmittel 70 aufweisen. Das Haftmittel 70 ist beispielsweise eine Klebeschicht oder umfasst eine Klebeschicht. Eine Haftfläche 71 des Haftmittels 70 eignet sich zum lösbaren Anhaften an die Arbeitsfläche H.

Das Haftmittel 70 ist an einem Trägerkörper 80 eines jeweiligen Halteelements 60 angeordnet, welcher formschlüssig mit dem Anlagekörper 40 lösbar verbindbar ist.

Der Trägerkörper 80 bildet einen Steckkörper und/oder Klemmkörper und/oder Rastkörper, der in Halteelement-Aufnahmen 55 des Anlagekörpers 40, also der Führungsschiene 41, einsteckbar ist. Die Halteelement-Aufnahmen 55 bilden vorteilhaft Steckaufnahmen 55A.

Die Halteelement-Aufnahmen 55 weisen einander gegenüberliegende längere Längsseiten 56 auf, die sich zwischen Längsendseiten 57 einer jeweiligen Halteelement-Aufnahme 55 erstrecken. Die Längsseiten 56 verlaufen zweckmäßigerweise geradlinig parallel zur Längserstreckung L des Anlagekörpers 40. Die Längsendseiten 57 sind beispielsweise rund, geradlinig oder dergleichen.

Die Halteelement-Aufnahmen 55 sind beispielsweise in einem Abstand zu den Stirnseiten oder Längsendseiten 46 des Anlagekörpers 40 vorgesehen. Ohne weiteres können auch weitere oder anderes angeordnete Halteelement-Aufnahmen vorgesehen sein. So müssen beispielsweise die Halteelement-Aufnahmen 55 nicht unbedingt parallel zur Längserstreckung L verlaufen, d. h. dass die Längsseiten 56 parallel zur Längserstreckung L sind. Es ist ohne weiteres auch möglich, dass beispielsweise die Längsseiten 56 parallel zu den Längsendseiten 46 des Anlagekörpers 40 verlaufen.

Ausgehend von der Oberseite 43 des Anlagekörpers 40 sind die Kanten der Halteelement-Aufnahme 55 geschrägt oder weisen eine Schrägpartie 58 auf. Dies erleichtert beispielsweise das Einstecken des jeweiligen Halteelements 60. Beispielsweise verlaufen die Schrägpartien 58 trichterartig.

Die Oberseite 43 des Anlagekörpers 40 sowie die Schrägpartien 58 bilden beispielsweise Stützkonturen 53 für die Stützvorsprünge 85.

Wenn das Halteelement 60 in die Halteelement-Aufnahme 55 eingesteckt ist, stützt es sich mit seinen Längsseiten 66 an den Längsseiten 56 der Halteelement-Aufnahme 55 sowie mit seinen Längsendseiten 67 an den Längsendseiten 57 der Halteelement-Aufnahme 55 ab.

Die Längsseiten 66 und die Längsendseiten 67 oder dort vorgesehene Wandflächen bilden Bestandteile von Formschlusskonturen 90, mit denen sich das Halteelement 60 an der Halteelement-Aufnahme 55 mit einer zu der Haftfläche 71 parallelen Richtungskomponente formschlüssig abstützt. Die Formschlusskonturen 90 sind z.B. Befestigungsmittel 90A.

Zur formschlüssigen Abstützung des Halteelements 60 an der Halteelement-Aufnahme 55 mit einer Richtungskomponente senkrecht zur Haftfläche 71, sodass verhindert wird, dass der Anlagekörper 40 dann, wenn das Haftelement 60 an der Arbeitsfläche H anhaftet, von der Arbeitsfläche H entfernbar ist, sind Hintergreif-Konturen 91 vorgesehen. Die Hintergreif-Konturen 91 stützen sich an der Oberseite 43 des Anlagekörpers 40 oder an nachfolgend noch erläuterten Stützflächen oder Hintergreifflächen 95 des Anlagekörpers 40 ab. Die Hintergreif-Konturen 91 sind an Stützvorsprüngen 85, genauer gesagt deren Hakenvorsprüngen 87 vorgesehen.

Das Halteelement 60 hat an seinen Längsseiten 66 Stützvorsprünge 85. Die Stützvorsprünge 85 sind in einer Reihenanordnung nebeneinander angeordnet. Die Stützvorsprünge 85 weisen Längsschenkel 86 sowie Hakenvorsprünge 87 auf. Die Längsschenkel 86 weisen Stützflächen 88 zum formschlüssigen Abstützen an den sich am Innenumfang der Halteelement-Aufnahme 55 erstreckenden Wandfläche 59 des Anlagekörpers 40 auf. Die Wandflächen 59 erstrecken sich von der Schrägpartie 58 zur Anlagefläche 42 oder Unterseite des Anlagekörpers 40 hin. Die Wandflächen 59 sind beispielsweise senkrecht zur Anlagefläche 42. Die Hakenvorsprünge 87 sind in ihrem Übergangsbereich zu der Stützfläche 88 abgeschrägt, sodass sie formschlüssig an den Schrägpartien 58 der Halteelement-Aufnahme 55 anliegen können, an denen die Hintergreifflächen 95 vorgesehen sind.

Bevorzugt ist es, wenn die Stützvorsprünge 85, insbesondere deren Längsschenkel 86, federnd nachgiebig sind, sodass das Halteelement 60 in die Halteelement-Aufnahme 55 sozusagen eingeklemmt werden kann, d. h. dass das Halteelement 60 mit der Halteelement-Aufnahme 55 verklemmbar ist.

Weiterhin vorteilhaft ist es, wenn an dem Längsschenkel 86 der Wandfläche 59 zugewandt ein Rastvorsprung 89 vorgesehen ist, der in eine in der Zeichnung nicht dargestellte Rastvertiefung an der Wandfläche 59 einrasten kann.

Die Rastvorsprünge oder Stützvorsprünge 85 sind mit dem Trägerkörper 80 vorteilhaft einstückig oder von diesem gebildet.

Der Trägerkörper 80 ist steifer als das Haftmittel 70, dennoch aber biegeflexibel. Der Trägerkörper 80 weist beispielsweise sich quer zu seiner Längserstreckung erstreckende Querversteifungskörper 81 auf. Die Querversteifungskörper 81 erstrecken sich vorzugsweise zwischen den Stützvorsprüngen 85 und sind beispielsweise als Versteifungsrippen ausgestaltet. Die Querversteifungskörper 81 sind an einer Oberseite 82 des Trägerkörpers 80 angeordnet, das Haftmittel 70 an seiner Unterseite 83. Mithin sind also zwischen den Querversteifungskörpern 81 Aussparungen 84 vorhanden, die eine Rollbewegung oder Biegebewegung des Trägerkörpers 80 und somit des Halteelements 60 ermöglichen.

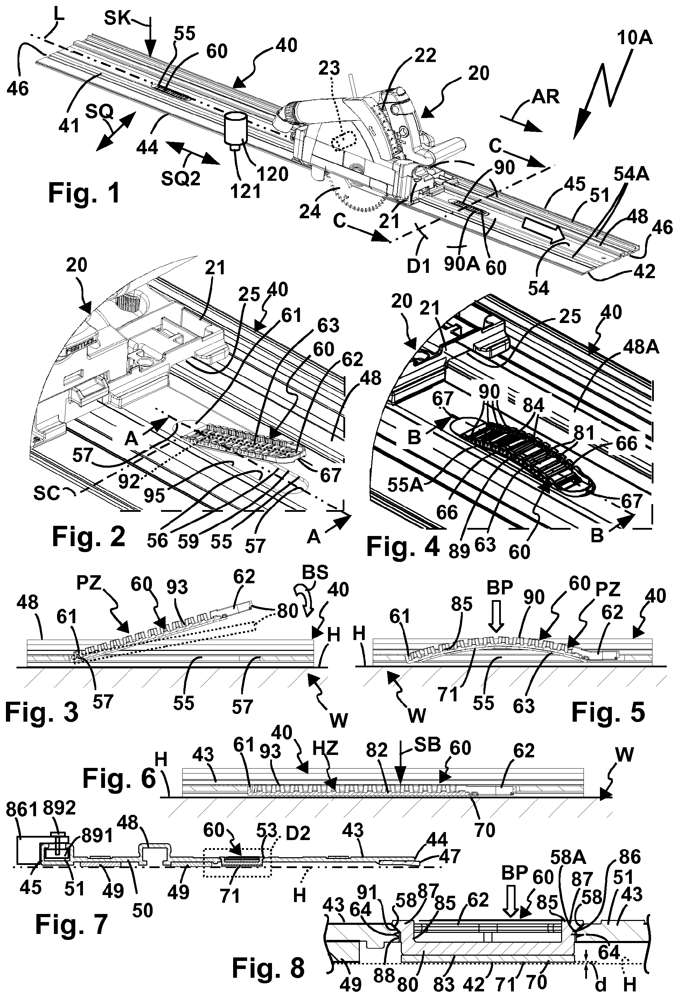

Eine Positionierung des Anlagekörpers 40 an der Arbeitsfläche H verläuft beispielsweise wie folgt:
Zunächst wird der Anlagekörper 40 bzw. die Führungsschiene 41 an der Arbeitsfläche H an den gewünschten Ort hin positioniert, sodass seine Anlagefläche 42 auf der Arbeitsfläche H in der gewünschten Position liegt. Sodann wird der Anlagekörper 40 anhand eines oder mehrerer Halteelemente 60 an der Arbeitsfläche H fixiert, deren Verstellung zwischen einem Positionierzustand PZ, beispielsweise dargestellt in den Figuren 2 und 4, und einem Haftzustand HZ, beispielsweise dargestellt in Figur 6, in verschiedener Weise realisierbar ist.

Eine Montagemöglichkeit des Halteelements 60 an der Halteelement-Aufnahme 55 und somit dem Anlagekörper 40 ist beispielsweise dadurch gegeben, dass zunächst eine Längsendpartie 61 an einem Längsende eines Halteelements 60 in die Halteelement-Aufnahme 55 eingesteckt wird, wobei die Längsendpartie 61 an den Längsendseiten 57 an der Halteelement-Aufnahme 55 abgestützt ist und/oder anliegt. Zwischen der Längsendpartie 61 und einer Haftpartie 63 des Halteelements 60, an der die Formschlusskonturen 90 vorgesehen sind, insbesondere die Stützvorsprünge 85, ist das Halteelement 60 beispielsweise biegeflexibel. So kann es beispielsweise im Rahmen einer Schwenkbewegung BS in Richtung der Arbeitsfläche H und mithin der Anlagefläche 42 des Anlagekörpers 40 geschwenkt werden, wodurch die Haftpartie 63 in Kontakt mit der Arbeitsfläche H gelangt und schließlich das Halteelement 60 mit seiner Längsendpartie 62, die am zur Längsendpartie 61 entgegengesetzten anderen Längsende des Haftelements 60 vorgesehen ist, formschlüssig am anderen Längsende der Halteelement-Aufnahme 55 abgestützt ist. Dann ist das Halteelement 60 sozusagen in die Halteelement-Aufnahme 55 eingeschwenkt und eingesteckt.

Weiterhin ermöglichen die Aussparungen 84 des Trägerkörpers 80, dass das Halteelement 60 im Rahmen einer Art Rollbewegung oder Wickelbewegung auf die Arbeitsfläche H abgerollt wird. Auch bei dieser Montagetechnik ist beispielsweise die Längsendpartie 61 schon bereits in der Halteelement-Aufnahme 55 aufgenommen und stützt sich an einer Längsendseite 57 derselben ab, wenn die Haftpartie 63 sozusagen auf die Arbeitsfläche H gerollt wird, sodass die Haftfläche 71 an der Arbeitsfläche H anhaftet.

Eine andere Möglichkeit zur Fixierung des Halteelements 60 an der Arbeitsfläche H ist beispielsweise dadurch gegeben, dass das Halteelement 60 mit seinen Längsendpartien 61,62 an den Längsendseiten 57 der Halteelement-Aufnahme 55 zur Anlage gebracht wird, wobei die Haftpartie 63 sich sozusagen von der Anlagefläche 62 und der Arbeitsfläche H zunächst weg wölbt, d. h. dass die Haftfläche 71 bogenförmig oberhalb der Arbeitsfläche H verläuft und somit an dieser nicht anhaftet (siehe zum Beispiel Figur 5).

Sodann wird mit einer Anpresskraft BP auf das Halteelement 60, insbesondere dessen mittleren Abschnitt bzw. die Haftpartie 63 eingewirkt, d. h. auf die Oberseite 82 ein Druck ausgeübt, sodass das Halteelement 60 in Richtung der Arbeitsfläche H verformt wird und die Haftfläche 71 an der Arbeitsfläche H anhaftet.

Beispielsweise drückt ein Bediener, insbesondere mit einem Finger oder einem Werkzeug, mit der Anpresskraft BP auf die Oberseite 82, die insoweit eine Betätigungshandhabe 93 darstellt oder aufweist, auf das Halteelement 60, um es vom Positionierzustand PZ in den Haftzustand HZ zu verstellen.

Weiterhin ist es möglich, dass das Halteelement 60 in die Halteelement-Aufnahme 55 teilweise oder vollständig eingesteckt ist, zunächst aber noch kein Kontakt der Haftfläche 71 des Haftmittels 70 mit der Arbeitsfläche H besteht, d. h. eine Distanz d zwischen diesen beiden Flächen besteht. Beispielsweise ist nämlich das Halteelement 60 dann, wenn es in die Halteelement-Aufnahme 55 bereits eingesteckt ist, in Halteelement-Aufnahme 55 noch verschieblich in Richtung der Anlagefläche 42 bzw. der Arbeitsfläche H aufgenommen. Durch einen Anpressdruck oder eine Anpresskraft BP auf die Oberseite 82 des Halteelements 60 wird die Haftfläche 71 in Richtung der Anlagefläche 42 oder Arbeitsfläche H verstellt, sodass das Halteelement 60 an der Arbeitsfläche H anhaftet. Dabei ist es auch möglich, dass das Halteelement 60 entweder wie im Ausführungsbeispiel biegeflexibel ist oder aber biegesteif ist, d. h. der Trägerkörper 80 beispielsweise keine Aussparungen 84 aufweist und/oder biegesteif ist.

Beispielsweise weist der Trägerkörper 80 eine schematisch angedeutete Versteifung 92 auf. Die Versteifung 92, beispielsweise eine Versteifungsrippe, erstreckt sich beispielsweise in Längserstreckungsrichtung des Trägerkörpers 80. Der Trägerkörper 80 ist vorzugsweise quer zu einer Steckachse SB, mit der er in die Halteelement-Aufnahme 55 oder Steckaufnahme 55A einsteckbar ist, biegesteif. Jedenfalls ist die vorgenannte Steckmontage, um das Halteelement 60 bzw. die Haftfläche 71 aus dem Positionierzustand PZ in den Haftzustand HZ bezüglich der Halteelement-Aufnahme 55 zu verstellen, mit biegesteifen und biegeflexiblen Halteelementen 60 möglich.

Es ist aber auch möglich, dass das biegeflexible oder auch biegesteife Halteelement 60, dessen Trägerkörper beispielsweise die Versteifung 92 aufweist oder plattenförmig ist, wie in Figur 2 angedeutet um eine Schwenkachse SC in die Halteelement-Aufnahme 55 einschwenkbar ist, um ihn von dem Positionierzustand PZ in den Haftzustand HZ zu bringen.

Weiterhin ist es möglich, dass an dem Halteelement 60, insbesondere an einander entgegengesetzten Seiten des Halteelements 60, Rastkonturen oder Stützkonturen 64 (schematisch dargestellt) vorgesehen sind, die sich an einer Widerlagerkontur 58A, z.B. der Schrägpartie 58, der Halteelement-Aufnahme 55 zum Halten des Halteelements 60 in dem Positionierzustand PZ abstützen und die durch Kraftbeaufschlagung mit dem Anpressdruck oder der Anpresskraft BP an der Widerlagerkontur 58A vorbei bewegt werden, um so das Halteelement 60 bzw. das Haftmittel 70 in den Haftzustand HZ zu verstellen. Beispielsweise kann zwischen der Haftfläche 71 und einem Hakenvorsprung 87 ein seitlich vor die Außenumfangskontur des Trägerkörpers 80 vorstehender Rastvorsprung als Stützkontur 64 vorgesehen sein, der in dem Positionierzustand PZ an der Schrägpartie 58 und somit der Widerlagerkontur 58A der Halteelement-Aufnahme 55 abgestützt ist und dann beim weiteren Verstellen des Halteelements 60 in Richtung des Haftzustandes HZ an der Schrägpartie 58 vorbei gleitet.

Anstelle des Halteelements 60 kann aber auch ein Halteelement 160 in der Halteelement-Aufnahme 55 angeordnet werden. Das Halteelement 160 und der Anlagekörper 40 bilden ein System 10B.

Das Halteelement 160 weist einen Trägerkörper 180 auf, der ähnlich wie der Trägerkörper 80 eine Reihenanordnung von Stützvorsprüngen 85 an seinen Längsseiten aufweist. Mithin kann also auch der Trägerkörper 180 in die Halteelement-Aufnahme 55 eingesteckt werden, wobei sich seine Stützvorsprünge 85 an der Oberseite 43 des Anlagekörpers 40 abstützen können. Allerdings hat das Halteelement 160 kein Haftmittel 70 (wobei das ohne weiteres möglich wäre), sondern Durchtrittsöffnungen 170, beispielsweise 3 Durchtrittsöffnungen 170, durch die hindurch Nägel oder dergleichen andere Befestigungsbolzen hindurchtreiben war sind, die in die Arbeitsfläche H eindringen. Die Durchtrittsöffnungen 170 sind in einer Reihenanordnung nebeneinander angeordnet und erstreckt sich beispielsweise im Bereich einer mittleren Haltepartie 163 des Halteelements 160, deren Länge etwa der Haftpartie 63 entspricht. Die Durchtrittsöffnungen 170 erstrecken sich von der Oberseite 82 zur Unterseite des Trägerkörpers 180. Selbstverständlich könnten Sie sich auch durch ein Haftmittel, beispielsweise eine Klebeschicht, hindurch erstrecken, die alternativ oder ergänzend an der Unterseite des Trägerkörpers 180 angeordnet sein kann.

Bei einem System 10C ist an dem bereits erläuterten Anlagekörper 40, also der Führungsschiene 41, ein Halteelement 260 lösbar befestigt, welches einen Trägerkörper 280 aufweist, der im Grunde dem Trägerkörper 80 entspricht. An seinen Längsseiten weist der Trägerkörper 280 nämlich die bereits erläuterten Stützvorsprünge 85 auf, sodass er sich formschlüssig an der Halteelement-Aufnahme 55 abstützen kann. Mithin kann also das Halteelement 260 anstelle des Halteelements 60 oder 160 in die Halteelement-Aufnahme 55 eingesteckt werden und stützt sich dann an zumindest seinen Längsseiten 266 an den Längsseiten 56 der Halteelement-Aufnahme 55 ab. Vorteilhaft ist es, wenn sich die Längsendpartien 261, 262 des Halteelements 260 an den Längsendseiten 57 der Halteelement-Aufnahme 55 ebenfalls abstützen.

An der Unterseite 83 des Trägerkörpers 280 befinden sich als ein Haftmittel 270 Saugköpfe 271. Die Saugköpfe 271 sind in sich beispielsweise parallel zu den Längsseiten 66 erstreckenden Reihen hintereinander oder nebeneinander angeordnet. Die Saugköpfe 271 dienen zum Ansaugen an der Arbeitsfläche H. Wenn das Halteelement 260 in die Halteelement-Aufnahme 55 eingesteckt wird, nämlich von der Oberseite 43 des Anlagekörpers 40 her, gelangen die Saugköpfe 271 in haftenden oder saugenden Kontakt mit der Arbeitsfläche H, sodass sie die Führungsschiene 41 bzw. den Anlagekörper 40 zumindest in einer Bewegungsrichtung quer zur Arbeitsfläche H fixieren.

Mithin liegen also zumindest die Stützflächen 88 des Trägerkörpers 280 seitlich an den Wandflächen 59 der Halteelement-Aufnahme 55 an. Bevorzugt sind aber Hakenvorsprünge 87 an dem Trägerkörper 280 vorhanden, die sich an der Oberseite 43 des Anlagekörpers 40 abstützen.

Der Trägerkörper 280 ist ebenso wie der Trägerkörper 80 biegeflexibel und hat beispielsweise zwischen den Stützvorsprüngen 85 Aussparungen 84, die eine Wickelbewegung oder Rollbewegung erleichtern. Ohne weiteres können in der Zeichnung nicht dargestellte Querversteifungen in der Art der Querversteifungskörper 81 am Trägerkörper 280 vorgesehen sein.

Selbstverständlich können Halteelemente in der Art der Halteelemente 60,160, 260, nicht nur an biegesteifen Anlagekörpern oder Führungsschienen befestigt werden, sondern auch an einer beispielsweise biegeflexiblen Führungsschiene 141, die einen Anlagekörper 140 eines Systems 10D darstellt.

Die Führungsschiene 141 weist beispielsweise eine Anlagefläche 42 zur Auflage oder Anlage an der Arbeitsfläche H auf und eine zu der Anlagefläche 42 entgegengesetzte Oberseite 143, die als Gleitfläche für beispielsweise die Werkzeugmaschine 20 geeignet ist. Zu deren Längsführung sind an der Oberseite 143 Profilkonturen 148 angeordnet, die die Funktion der Führungskontur 48 realisieren, also in die Führungsaufnahme 25 der Werkzeugmaschine 20 eingreifen können. Die Führungskonturen 48 sind beispielsweise durch vor die Oberseite 143 vorstehende oder hochstehende Führungsrippen realisiert, die anders als in der Zeichnung dargestellt durchaus auch Aussparungen oder Schlitze in der Art der Aussparungen 84 des Trägerkörpers 80 aufweisen können, sodass ein Aufwickeln oder Aufrollen des Anlagekörpers 140 auf einen Wickel 151 leichter vonstattengeht. Die Aussparungen erstrecken sich beispielsweise von den freien Endbereichen der Führungskonturen 148 in Richtung der Oberseite 143.

Die Führungskonturen 148 erstrecken sich parallel zu Längsseiten 144, 145 des Anlagekörpers 140. Vorteilhaft ist es, wenn sich die Führungskonturen 148 weiterhin von der einen Stirnseite 146 zu anderen Stirnseite 146 des Anlagekörpers 40 erstrecken, also über dessen vollständige Längslänge.

Der Anlagekörper 140 weist in der Art von Spreizbändern ausgestaltete Wölbungsbänder oder Wölbungskonturen 147 auf, beispielsweise mehrere parallel zu dessen Längserstreckung verlaufende Wölbungskonturen 147. Die Wölbungskonturen 147 erstrecken sich parallel zu den Längsseiten 144, 145. Die Wölbungskonturen 147 verlieren ihre Wölbung quer zur Längserstreckung des Anlagekörpers 140, wenn dieser zu dem Wickel 151 aufgewickelt wird. Dadurch ist der Wickel 151 stabil.

Obwohl der Anlagekörper 140 eine optimale Längsführung an der Werkzeugmaschine 20 ermöglicht, ist er jedoch vergleichsweise dünn und leicht, was dazu führen kann, dass er an der Arbeitsfläche H verrutscht, selbst wenn an seiner Unterseite, der Anlagefläche 42, ein rutschhemmender Belag aus Gummi oder dergleichen vorgesehen ist. Demensprechend vorteilhaft ist es, wenn auch der Anlagekörper 140 eine Halteelement-Aufnahme 55 oder mehrere Halteelement-Aufnahmen 55 für eines der Halteelemente 60, 160, 260 aufweist.

Die Halteelemente 60, 160, 260 stehen im am jeweiligen Anlagekörper 40, 140 montierten Zustand, wenn sie in einer jeweiligen Halteelement-Aufnahme 55 aufgenommen sind und den Positionierzustand PZ einnehmen, nicht oder nur soweit vor eine Führungsfläche des jeweiligen Anlagekörpers 40, 140 vor, dass eine Längsbewegung der Werkzeugmaschine 20 bzw. des Führungselements 21 entlang der Längserstreckung L nicht behindert ist. Beispielsweise sind die Halteelemente 60, 160, 260 in den Halteelement-Aufnahmen 55 aufgenommen, stehen jedoch nicht entgegengesetzt zur Anlagefläche 42 vor die Führungsflächen 54A vor.

Die Halteelemente 60, 160, 260 halten die Anlagekörper 40, 140 mit einer in Richtung der Anlagefläche 42 gerichteten Stützkraftkomponente SK im Sinne eines Haltens des Anlagekörpers 40, 140 an der Arbeitsfläche H.

Die Halteelemente 60, 160, 260 halten den Anlagekörper 40, 140 mit einer Querkraftkomponente SQ quer zur zu seiner Längserstreckung L und einer Querkraftkomponente SQ2 parallel zu seiner Längserstreckung L an der Arbeitsfläche H. Durch die Querkraftkomponente SQ, SQ2 ist der Anlagekörper 40, 140 gegen eine Scherbewegung quer zu der Arbeitsfläche H fixiert. Es versteht sich, dass allein schon das Halten gegen Scherkräfte, also eine oder beide der Querkraftkomponenten SQ, SQ2 ausreichend sein kann, d. h. dass das Halten des jeweiligen Anlagekörpers 40, 140 durch die Halteelemente 60, 160, 260 mit der Stützkraftkomponente SK vorteilhaft, jedoch nicht zwingend notwendig ist. Allein schon die Fixierung des Anlagekörpers 40, 140 bezüglich der Arbeitsfläche H parallel zur Arbeitsfläche H, stellt einen erheblichen Vorteil dar.

Bei den bisherigen Ausführungen wurden Anlagekörper erläutert, die als von einer Werkzeugmaschine oder einem sonstigen zu führenden oder stützenden Gegenstand separate Komponenten ausgeführt sind. Es ist aber auch möglich, dass ein Anlagekörper oder Führungskörper einen Bestandteil einer Werkzeugmaschine bildet, wie nachfolgend deutlich wird. Vorteilhaft ist insbesondere, eine derartige Werkzeugmaschine anhand erfindungsgemäßer Halteelemente temporär an der zu bearbeitenden Arbeitsfläche zu fixieren, um eine optimale Werkstückbearbeitung zu ermöglichen.

Eine beispielsweise als Oberfräse ausgestaltete Werkzeugmaschine 320 weist beispielsweise einen Anlagekörper 340 in Gestalt eines Tisches oder Fußes auf. Der Anlagekörper 340 kann mit seiner Unterseite, die eine Anlagefläche 342 bildet, auf einem Untergrund, beispielsweise dem Werkstück W abgestellt werden. Der Anlagekörper 340 hat an seiner von der Anlagefläche 342 abgewandten Oberseite 343 ein Maschinenlager 348. An dem Maschinenlager 348 ist eine Antriebseinheit 322 längsverschieblich gelagert. Das Maschinenlager 348 umfasst beispielsweise mehrere Führungsstangen 349, die in Führungsaufnahmen 325 der Antriebseinheit 322 längsverschieblich eingreifen. Die Antriebseinheit 322 weist einen Antrieb 323 für ein Arbeitswerkzeug 324 auf. Das Arbeitswerkzeug 324 ist beispielsweise ein Fräskopf, ein Bohrer oder dergleichen. Die Antriebseinheit 322 kann beispielsweise an Handgriffen 326, 327 von einem Bediener ergriffen werden, um das Arbeitswerkzeug 324 in Richtung zu der Arbeitsfläche H hin oder von dieser weg anhand des Maschinenlagers 348 zu verstellen (entsprechend einer Pfeilrichtung LH).

An dem Anlagekörper 340 ist eine Halteelement-Aufnahme 55 vorgesehen. Beispielsweise weist der Anlagekörper 340 einen seitlichen Abschnitt 344 auf, an dem die Halteelement-Aufnahme 55 vorgesehen ist. Der Bediener kann also zunächst den Anlagekörper 340 an der Arbeitsfläche H positionieren und dann mit einem der Halteelemente 60, 160, 260 bezüglich der Arbeitsfläche H für die Bearbeitung der Arbeitsfläche H oder des Werkstücks W temporär fixieren, beispielsweise durch die bereits erläuterten Montagemethoden des Halteelements 60, 160, 260 an einem Anlagekörper.

Ohne weiteres können auch weitere Halteelement-Aufnahmen in der Art der Halteelement-Aufnahme 55 am Anlagekörper 340 oder einem an diesem vorzusehenden weiteren Abschnitt in der Art des Abschnitts 344 vorgesehen sein.

Auch Längsführungen oder Einstecköffnungen, bei denen eines der Halterelemente 60, 160, 260 mit einer Bewegungsrichtung parallel zu seiner Haftfläche 71 einzustecken ist, wie beim nachfolgend erläuterten Ausführungsbeispiel, können bei einer Werkzeugmaschine bzw. deren Anlagekörper oder Führungskörper vorgesehen sein.

Die Halteelemente 60, 160, 260 können auch an Anlagekörpern verwendet werden, die unabhängig von einer Werkzeugmaschine nutzbar, aber auch in Verbindung mit einer Werkzeugmaschine nutzbar sind:
Ein Anlagekörper 440 weist beispielsweise eine Halteelement-Aufnahme 455 auf. Die Halteelement-Aufnahme 455 ist beispielsweise im Bereich einer Anlagefläche 442 des Anlagekörpers 440 vorgesehen.

Der Anlagekörper 440 kann beispielsweise mit einem manuell betätigbaren Werkzeug, insbesondere einem Schneidwerkzeug, genutzt werden. So kann der Anlagekörper 440 beispielsweise ein Führungslineal sein.

Der Anlagekörper 440 weist einen Grundschenkel 444 auf, von dem Seitenschenkel 445, 446 U-förmig abstehen. Die Halteelement-Aufnahme 455 ist an dem Grundschenkel 444 an seiner von den Seitenschenkeln 445, 446 abgewandten Unterseite vorgesehen. Eine Oberseite 443 des Grundschenkels 444 erstreckt sich zwischen den Seitenschenkeln 445, 446 und bildet sozusagen den Boden einer Vertiefung zwischen den Seitenschenkeln 445, 446.

Von dem Seitenschenkel 446 steht ein Stützschenkel 447 seitlich ab. Der Stützschenkel 447 und der Grundschenkel 444 verlaufen vorzugsweise parallel zueinander. Der Seitenschenkel 446 und der Stützschenkel 447 sind bezüglich des Grundschenkels 444 stufenförmig.

Der Seitenschenkel 446 weist an seiner vom Grundschenkel 444 abgewandten Seite eine Stützfläche 448 auf. Der Stützschenkel 447 weist an seiner dem Seitenschenkel 446 zugewandten Seite eine Stützfläche 449 auf. Die Stützflächen 448, 449 sind zueinander winkelig. Wenn die Anlagefläche 442 auf der Arbeitsfläche H aufliegt, ist zwischen dem Stützschenkel 447 und dem Seitenschenkel 446 eine Aufnahme gebildet, in die beispielsweise ein Werkstück W2 eingreifen kann, welches am Anlagekörper 440 dann abgestützt ist. Der Stützschenkel 447 bildet dann beispielsweise eine Art Niederhalter. Anstelle des Werkstücks W2 kann selbstverständlich auch ein weiterer Anlagekörper, beispielsweise der Anlagekörper 340 der Werkzeugmaschine 320, in die vorgenannte Aufnahme eingreifen und/oder vom Anlagekörper 340 gehalten werden.

Auch eine von dem Grundschenkel 444 abgewandte Seite des Seitenschenkels 445 kann als Stütze dienen und beispielsweise eine Stützfläche 450 bereitstellen.

Ferner kann eine vom Grundschenkel 444 und den Seitenschenkeln 445, 446 begrenzte U-förmige Aufnahme als Stütz-Aufnahme dienen.

Die Halteelement-Aufnahme 455 weist an ihren Längsseiten Wandflächen 459 auf, ist jedoch an ihren Längsenden 457 offen. Zwischen den Wandflächen 459 erstreckt sich ein Boden 456 der Halteelement-Aufnahme 455, an dem die Stützvorsprünge 85 mit ihren freien Enden, also mit ihren Längsenden, die am weitesten von der Unterseite 83 des Trägerkörpers 80 entfernt sind, abstützen können. Die Hakenvorsprünge 87 des Halteelements 60 bilden Führungsvorsprünge, die in Führungsaufnahmen 458 der Halteelement-Aufnahme 455 eingreifen. Die Führungsaufnahmen 458 erstrecken sich über die gesamte Länge der Halteelement-Aufnahme 455, also vom einen Längsende 457 zum anderen Längsende 457, könnten aber auch kürzer sein. Jedenfalls bilden die Führungsaufnahmen 458, die sich vom Boden 456 der Halteelement-Aufnahme für 55 in die Wandflächen 459 hinein erstrecken, Hinterschnitte oder Hintergreifflächen oder weisen Hintergreifflächen 495 auf, an denen sich die Hakenvorsprünge 87, die insoweit Hintergreif-Konturen 491 bilden, abstützen. Die Hakenvorsprünge 87 halten dann den Anlagekörper 440 mit einer in Richtung der Anlagefläche 442 gerichteten Stützkraftkomponente SK im Sinne eines Haltens des Anlagekörpers 440 an der Arbeitsfläche H.

Die Montage des Anlagekörpers 440 am Halteelement 60 kann beispielsweise derart geschehen, dass dieses zunächst an die Arbeitsfläche H angeklebt wird und anschließend der Anlagekörper 440 mit seiner Längsführung, der Halteelement-Aufnahme 455, parallel zur Arbeitsfläche H oder Anlagefläche 442 auf das Halteelement 60 aufgeschoben wird, etwa entsprechend einer Schiebeachse SA.

Es ist aber auch möglich, dass der Anlagekörper 440 mit dem bereits in der Halteelement-Aufnahme 455 aufgenommenen Halteelement 60 an der Arbeitsfläche H positioniert wird, wobei zunächst noch die Haftfläche 71 noch einen Abstand zu der Arbeitsfläche H und von dieser entfernt ist. Durch beispielsweise ein Spiel der Hakenvorsprünge 87 in den Führungsaufnahmen 458 ist es möglich, dass die Haftfläche 71 durch Druck auf den Grundschenkel 444 mit einer Kraft oder Anpresskraft BP in Kontakt mit der Arbeitsfläche H gebracht wird, sodass der Anlagekörper 440 an der Arbeitsfläche H fixiert ist.

Der Anlagekörper 440 eignet sich auch zur Abstützung eines beispielsweise an einer Wand zu montierenden Werkstücks, d. h. als Montagehilfe, der Anlagekörper 440 an der Wand (also der Arbeitsfläche H) zunächst befestigt wird und sich dann das Werkstück, zum Beispiel ein aufzuhängendes Bild, an einer seiner Stützflächen abstützen kann. Des Weiteren können auch sonstige Befestigungskonturen einem erfindungsgemäßen Anlagekörper vorgesehen sein, so zum Beispiel ein Haken 401, der schematisch dargestellt ist.

Das Konzept von Hintergreifkonturen und Hintergreifflächen sowie Aussparungen, die ein Wickeln oder Rollen eines Halteelements ermöglichen, lässt sich auch anderweitig realisieren, was durch das nachfolgend erläuterte Ausführungsbeispiel deutlicher wird.

Ein schematisch dargestellter Anlagekörper 540 kann beispielsweise als Führungselement einer Werkzeugmaschine oder für eine Werkzeugmaschine ausgestaltet sein, ähnlich wie der Anlagekörper 40. Der Anlagekörper 540 weist beispielsweise Längsseiten 544,545 auf, die sich zwischen seinen Stirnseiten 546 erstrecken. Eine Oberseite 543 des Anlagekörpers 540 kann beispielsweise eine Gleitfläche für eine Werkzeugmaschine darstellen, eine Basis für das Maschinenlager 348 oder dergleichen. An einer zu der Oberseite 543 entgegengesetzten Unterseite ist eine Anlagefläche 542 zum Auflegen beispielsweise auf die Arbeitsfläche H vorgesehen. An der Unterseite oder Anlagefläche 542 können rutschhemmende Beläge oder dergleichen vorgesehen sein, wobei vorzugsweise ein fester Halt an der Arbeitsfläche H durch einen Halteelement 560 realisiert oder realisierbar ist.

Im Bereich der Anlagefläche 542 hat der Anlagekörper 540 eine Halteelement-Aufnahme 555 für ein Halteelement 560. Das Halteelement 560 weist einen Trägerkörper 580 auf, an dessen Unterseite 583 ein Haftmittel 570 mit einer Haftfläche 571, beispielsweise einer Klebefläche und/oder Ansaugfläche entsprechend der Haftmittel 70, 270 vorgesehen ist, damit das Halteelement 560 an der Arbeitsfläche H anhaften kann.

Das Halteelement 560 ist entlang einer Steckachse SA in die Halteelement-Aufnahme 555 einsteckbar, bildet also einen Steckkörper. Die Halteelement-Aufnahme 555 bildet eine Längsführung bezüglich der Steckachse SA für das Halteelement 560.

Das Halteelement 560 weist an seinen Längsseiten 566 Stützflächen 588 auf, die zur flächigen Anlage an Wandflächen 559 der Halteelement-Aufnahme 555 geeignet sind. Die Wandflächen 559 und die Stützflächen 588 verlaufende quer zur Steckachse SA, vorzugsweise rechtwinkelig zur Haftfläche 571. Somit ist also der Anlagekörper 540 am Halteelement 560 in Bezug auf Kräfte quer zur Steckachse A und parallel zur Haftfläche 571 oder zur Anlagefläche 542 abgestützt.

Weiterhin stützt sich das Halteelement 560 mit der Oberseite 582 des Trägerkörpers 580 am Boden 558 der Halteelement-Aufnahme 555 ab.

Obwohl der Trägerkörper 580 an sich eine blockartige Gestalt aufweist, ist er dennoch biegeflexibel. Zu diesem Zweck sind Aussparungen 584 am Trägerkörper 580 vorgesehen, die sich quer zur Steckachse Richtung SA erstrecken und somit ein Biegen im Sinne eines Wickelns oder Rollens des Trägerkörpers 580 ermöglichen.

In Bezug auf eine Kraftrichtung, die zur Haftfläche 571 oder Anlagefläche 542 winkelig, beispielsweise rechtwinkelig verläuft, ist eine Abstützung anhand von Formschlusskonturen 590 vorgesehen, die als Schwalbenschwanzkonturen ausgestaltet sind. Beispielsweise hat der Trägerkörper 580 an seiner Oberseite 582 eine Art Schwalbenschwanz-Positivkontur, nämlich einen Stützvorsprung 585 oder eine Reihenanordnung von Stützvorsprüngen 585, die sich parallel zur Steckachse SA erstrecken, weil nämlich der Trägerkörper 580 aufgrund der Aussparungen 584 segmentiert ist.

Die Formschlusskonturen 590 oder Stützvorsprünge 585 weisen Hintergreif-Konturen 591, nämlich Schrägflächen auf, die sich schräg zwischen der Oberseite 582 und einer zu der Oberseite 582 parallelen Stirnseite oder Oberseite 586 des jeweiligen Stützvorsprungs 585 erstrecken. Diese sind in eine Formschlussaufnahme 597 an der Halteelement-Aufnahme 555 in Anlage mit Hintergreifflächen 595 bringbar. Es ist möglich, aber nicht notwendig, dass die Oberseite 586 an einem Boden 596 der Formschlussaufnahme 597 anliegt. Durch den Hintergriff der Hintergreif-Konturen 591 mit den Hintergreifflächen 595 ist der Anlagekörper 540 am Halteelement 560 mit einer Stützkraftkomponente SK im Sinne eines Haltens des Anlagekörpers 540 an der Arbeitsfläche H gehalten.

Die Formschlusskonturen 590 können sich über die komplette Länge des Halteelements 560 zwischen seinen Längsendseiten 567 erstrecken, aber auch nur über einen Teil der Länge.

Ein Anlagekörper 640 weist ähnlich wie der Anlagekörper 540 eine sich parallel zu seinen Längsseiten 644, 645 erstreckende Halteelement-Aufnahme 655 auf. Die Halteelement-Aufnahme 655 hat sich parallel zur Längserstreckung LE des Anlagekörpers 540 bzw. parallel zu den Längsseiten 644, 645 erstreckende Wandflächen 659 sowie eine Bodenfläche 658. Im Bereich der Bodenfläche 658 kann eine Formschlussaufnahme 597 vorhanden sein, sodass beispielsweise ein Halteelement in der Art des Halteelements 560 formschlüssig in der Halteelement- Aufnahme 655 gehalten werden kann.

Die Halteelement Aufnahme 655 kann sich über die gesamte Länge des Anlagekörpers 640 erstrecken, d. h. zwischen seinen Längsendseiten 646. Es ist aber auch möglich, dass die Halteelement Aufnahme 655 (ebenso die Halteelement-Aufnahme 555) in der Art eines Sackloches ausgestaltet ist, d. h. in Bezug auf die Steckachse SA einen Boden oder einen Endanschlag aufweist.

Die Halteelement-Aufnahme 655 dient zur Aufnahme von Halteelementen 660 oder 760. Die Halteelemente 660, 760 weisen Haftmittel 670, 770 mit Haftflächen 671, 771, beispielsweise Klebeflächen auf. Diese Haftflächen 671, 771 können sich über die gesamte Länge des jeweiligen Halteelements 660, 760, also zwischen den einander entgegengesetzten Längsendseiten 667, 767 erstrecken oder auch nur über einen Teil davon.

An den Längsseiten 666, 766 der Trägerkörper 680, 780 der Halteelemente 660, 760 sind Hintergreif-Konturen 691, 791 ausgebildet, beispielsweise Schrägflächen, die in einen Hintergriff mit den schrägen Wandflächen 659 der Halteelement-Aufnahme 655 bringbar sind. Somit ist der Anlagekörper 640 am jeweiligen Halteelement 660, 760 mit einer Stützkraftkomponente SK quer zur Steckachse SA gehalten.

An den Trägerkörpern 680, 780 können beispielsweise Aussparungen 684, 784 vorgesehen sein.

Während der Trägerkörper 680 sozusagen ein massiver, blockartiger Trägerkörper ist, weist der Trägerkörper 780 einen Grundschenkel 781 auf, von dem Seitenschenkel und somit Stützvorsprünge 785 seitlich abstehen. Die vom Grundschenkel 781 abgewandten Außenseiten oder Außenflächen bilden die Hintergreifkonturen 791.

Die Anlagekörper 540 und 640 sind vorzugsweise zumindest im Bereich ihrer Halteelement-Aufnahmen 555, 655 biegeflexibel derart, dass sie durch einen auf ihre Oberseite 543, 643 im Bereich der Halteelement-Aufnahmen 555, 655 wirkenden Anpressdruck BP in Richtung der Arbeitsfläche H und/oder der Anlagefläche 542, 642 verformbar sind derart, dass die Haftmittel 570, 670, 770 der Halteelemente 560, 660, 760 aus eine Positionierzustand PZ, in denen die Haftmittel 570, 670, 770 und/oder deren Haftflächen 571, 671, 771 hinter die Anlagefläche 542, 642 zurückstehen und/oder einen Abstand zu der Arbeitsfläche H aufweisen, in den Haftzustand HZ verstellbar sind, in dem die Haftmittel 570, 670, 770 und/oder deren Haftflächen 571, 671, 771 mit der Anlagefläche 542, 642 fluchten oder vor diese vorstehen und/oder in Fixier- oder Haft-Kontakt mit der Arbeitsfläche H sind. Die Anlagekörper 540 und 640 sind beispielsweise aufgrund ihres Materials biegeflexibel und/oder weisen Verformungsaussparungen 547, 647, beispielsweise Nuten, Schlitze oder dergleichen, auf, die die Verformbarkeit oder Flexibilität begünstigen oder erleichtern.

Ebenso wie der Anlagekörper 40 ist ein Anlagekörper 840 als eine Führungsschiene 41 ausgestaltet. Die grundsätzliche Ausgestaltung der Konturen der Führungsschiene 41, so zum Beispiel diejenige des Profilkörpers 50, der Auflageelemente 49, des Führungsvorsprunges 48A und der Führungskontur 48 sind beim Anlagekörper 840 gleich wie beim Anlagekörper 40.

Mithin kann also der Anlagekörper 840, wenn er auf der Arbeitsfläche H aufliegt, zwar reibschlüssig an der Arbeitsfläche H anhaften, dennoch aber an ihr entlang verschoben werden. Um dem Anlagekörper 840 in dieser Situation einen lösbaren Halt an der Arbeitsfläche H zu ermöglichen, sind Halteelemente 860, 960 vorgesehen.

Die Halteelemente 860 umfassen beispielsweise Halterungen 861, die lösbar und formschlüssig mit dem Anlagekörper 840 verbindbar sind. Beispielsweise umfassen die Halterungen 861 einen insbesondere plattenförmigen Träger 862, der anhand einer Klemmeinrichtung 890 mit dem Anlagekörper 840 verbindbar ist. Die Klemmeinrichtung 890 umfasst einen Klemmkörper 891, der beispielsweise in die Aufnahme 51 an verschiedenen Längspositionen bezüglich der Längserstreckung L des Anlagekörpers 840 positionierbar ist. Der Klemmkörper 891 ist beispielsweise in der Art eines Nutensteins ausgestaltet, der in die nutförmige oder schlitzförmige Aufnahme 51 einführbar ist und anhand einer Klemmschraube 892 in der Aufnahme 51 verklemmbar ist. Dann ist die Halterung 861 in Bezug auf die Längserstreckung L am Anlagekörper 840 fixiert. Selbstverständlich kann die Halterung 861 und somit das Halteelement 860 auch am Anlagekörper 40 anhand der Klemmeinrichtung 890 montierbar sein.

Der Träger 862 weist eine Lagereinrichtung 866 auf, anhand derer ein Trägerkörper 880 bezüglich des Trägers 862 und somit bezüglich des Anlagekörpers 840 um eine Schwenkachse SW schwenkbar gelagert ist, um ein an dem Trägerkörper 880 angeordnetes Haftmittel 870 aus einem Positionierzustand PZ, in dem der Anlagekörper 840 an der Arbeitsfläche H verschieblich ist, abgesehen von dem Reibschluss zwischen den Auflageelementen 49 und der Arbeitsfläche H, in einen Haftzustand HZ zu verstellen, in dem das Haftmittel 870 mit seiner beispielsweise eine Klebefläche oder Saugfläche umfassenden Haftfläche 871 an der Arbeitsfläche H anhaftet und somit das Halteelement 860 und letztlich den Anlagekörper 840 bezüglich der Arbeitsfläche H fixiert.

Der Trägerkörper 880 ist vorzugsweise plattenförmig und weist einen Lagerabschnitt 885 sowie einen Griffabschnitt 886 auf, zwischen denen sich eine Haftpartie 863 befindet. Der Lagerabschnitt 885 weist beispielsweise Lagervorsprünge oder Lagerböcke für die Lagereinrichtung 866 auf. Am Griffabschnitt 886 kann der Trägerkörper 880 von einem Bediener ergriffen werden.

An dem Griffabschnitt 886 sind Rastkonturen 887 zum Verrasten mit Rast-Gegenkonturen 888 am Träger 862 vorhanden. Wenn aus dem Positionierzustand PZ in den Haftzustand HZ verstellt ist, können die Rastkonturen 887 mit den Rast-Gegenkonturen 888 verrasten. Dabei ist es möglich, dass in diesem Rastzustand die an einer Unterseite 883 des Trägerkörpers 880 vorgesehene Haftfläche 861 bereits in Kontakt mit der Arbeitsfläche H gelangt und somit den Trägerkörper 880 und letztlich den Anlagekörper 840 an der Arbeitsfläche H fixiert. Es ist aber auch möglich, dass in einer Stellung, in der der Trägerkörper 880 bereits mit der Halterung 861 verrastet ist, noch ein Abstand zwischen der Haftfläche 871 und der Arbeitsfläche H besteht, d. h. dass die Haftfläche 871 noch bezüglich der Arbeitsfläche H hinter die Anlagefläche 42 zurück steht. Durch einen Druck oder eine Anpresskraft BP auf die Oberseite 882 des Trägerkörpers 880, beispielsweise mit einem Finger, wölbt sich der Trägerkörper 880 in Richtung der Anlagefläche 42 und somit in Richtung der Arbeitsfläche H durch, wodurch das Haftmittel 870 an der Arbeitsfläche H in Kontakt gelangen kann.

Der Ablösevorgang des Haftmittels 870 von der Arbeitsfläche H gelingt einfach, indem nämlich der Bediener den Trägerkörper 880, den man auch als einen Schwenkkörper oder eine Schwenklage bezeichnen kann, am Griffabschnitt 886 ergreift, wodurch zum einen die Rastkonturen 887 außer Eingriff mit den Rast-Gegenkonturen 888 gelangen, zum andern aber der Trägerkörper 880 in einer Abschäl-Bewegung das Haftmittel 870 sozusagen von der Arbeitsfläche H zieht. Dabei ist es möglich, dass der Trägerkörper 880 zusätzlich zu der Schwenkbewegung biegeflexibel verformbar ist, sodass nach und nach oder sequenziell verschiedene Abschnitte der Haftfläche 971 von der Arbeitsfläche H abgezogen werden.

An dem Träger 862 sind vorzugsweise noch Durchtrittsöffnungen 872 für Nägel, Schrauben oder dergleichen andere Befestigungsbolzen zur unmittelbaren Befestigung der Halterung 861 an der Arbeitsfläche H vorgesehen.

Das Halteelement 860 kann ebenso wie das Halteelement 60 durch eine Abdeckung abgedeckt sein, beispielsweise wie bei den nachfolgend erläuterten Halteelementen 960A, 960B und 960C der Fall.

Außerdem ist es möglich, dass die bei den Halteelementen 960A und 960B verwendeten Haftmittel 970 beispielsweise am Träger 80 des Halteelements 60 eingesetzt sind.

Die Halteelemente 960A, 960B können unmittelbar mit dem Anlagekörper 40, 140 oder 840 verklebt werden, beispielsweise an die Unterseite 52 des Profilkörpers 50 angeklebt werden, insbesondere in den Zwischenräumen zwischen den Auflageelementen 49, wo die Anlagefläche 42 vor die Unterseite 52 vorsteht und somit ein Abstand zwischen dem Anlagekörper 40, 840 und der Arbeitsfläche H vorhanden ist, wenn der Anlagekörper 40, 840 auf der Arbeitsfläche H aufliegt. Ohne weiteres können die Halteelemente 960A, 960B auch an den anderen erläuterten Anlagekörpern 340, 440, 540, 640 eingesetzt werden, wofür die nachfolgend erläuterte Klebefläche 973 geeignet ist.

Die Haftmittel 970 der Halteelemente 960A, 960B sind beidseitig klebend. Sie weisen eine Haftfläche 971 zur Anhaftung an der Arbeitsfläche H sowie an ihrer entgegengesetzten Seite eine Klebefläche 973 zur Verklebung mit einem weiteren Körper, beispielsweise unmittelbar dem Anlagekörper 40, 140, 840 oder einem Trägerkörper 980A im Falle des Halteelements 960A. Das Haftmittel 970 des Halteelements 960A könnte aber auch unmittelbar an die Unterseite 52 des Anlagekörpers 40, 840 angeklebt werden.

Der Trägerkörper 980A kann formschlüssig in Halteelement-Aufnahmen 855A des Anlagekörpers 840 eingesteckt werden. Seine Schmalseiten entsprechen den Stützflächen 88 des Trägerkörpers 80 und liegen dementsprechend an den Wandflächen der Halteelement-Aufnahme 855A an, wenn der Trägerkörper 980A in die sozusagen als Steckaufnahme ausgestaltete Halteelement-Aufnahme 855A eingesteckt ist. Insbesondere liegen Längsseiten 966 des Trägerkörpers 980A an den inneren Längsseiten der Halteelement- Aufnahme 855A formschlüssig an. Weiterhin liegen Längsendseiten 967 des Trägerkörpers 980A an den Längsendseiten oder Längsendbereichen der Halteelement-Aufnahme 855 formschlüssig an. Somit stützt sich also der Anlagekörper 840 mit seiner Halteelement-Aufnahme 855A in Kraftrichtungen parallel zur Anlagefläche 42 oder Haftfläche 971 an dem Trägerkörper 980A und somit dem Halteelement 960A ab.

An Längsendbereichen des Trägerkörpers 980A sind jedoch Aussparungen 981 vorhanden, durch die ein Betätigungsabschnitt 992 einer Abdeckung 990A des Halteelements 960A sowie ein Handhabungsabschnitt 972 des Haftmittels 970 von der Unterseite 983 zur Oberseite 982 des Trägerkörpers 980A vorstehen und durch einen Bediener ergriffen werden können.

Prinzipiell möglich ist es aber auch, dass der Trägerkörper 980A kürzer als eine Längserstreckung der Halteelement-Aufnahmen 855A ist, sodass an deren Längsendbereichen Aussparungen 856A vorhanden sind, durch die der Betäti-gungsabschnitt 992 und/oder der Handhabungsabschnitt 972 von der Unterseite des Anlagekörpers 40 zu dessen Oberseite 43 vorstehen können.

Bei dem Halteelement 960B bildet sozusagen das Haftmittel 970 selbst dessen Trägerkörper 980B. Die Verklebung 973 kann unmittelbar mit dem Anlagekörper 40, 840 realisiert sein.

Das Halteelement 960B wird am Anlagekörper 40, 840 vorzugsweise so verklebt, dass dessen Handhabungsabschnitt 972 sowie Betätigungsabschnitt 992 seitlich vor den Anlagekörper 40, 840 vorsteht oder durch eine Aussparung 856B von der Unterseite zur Oberseite 43 des Anlagekörpers 40, 840 vorsteht. Die Aussparung 856B ist vorzugsweise in der Art eines Fensters und/oder beispielsweise als eine Durchtrittsöffnung ausgestaltet, die sich von der Unterseite zur Oberseite 43 des Anlagekörpers 40, 840 erstreckt.

Eine Höhe der Halteelemente 960A, 960B im am Anlagekörper 40, 840 befestigten Zustand ist vorzugsweise so bemessen, dass eine Haftfläche 971 ihrer Haftmittel 970 etwa mit der Anlagefläche 42 des Anlagekörpers 40, 840 fluchtet.

In dem Positionierzustand PZ ist die Haftfläche 971 durch einen Abdeckabschnitt 991 der Abdeckung 990A, 990B des Halteelements 960A, 960B abgedeckt. Die Abdeckung 990A, 990B ist vorzugsweise folienartig und kann sozusagen von der Haftfläche 971 abgezogen werden, sodass die Haftfläche 971 und mithin das Halteelement 960A, 960B aus dem Positionierzustand PZ in den Haltezustand oder Haftzustand HZ überführbar ist.

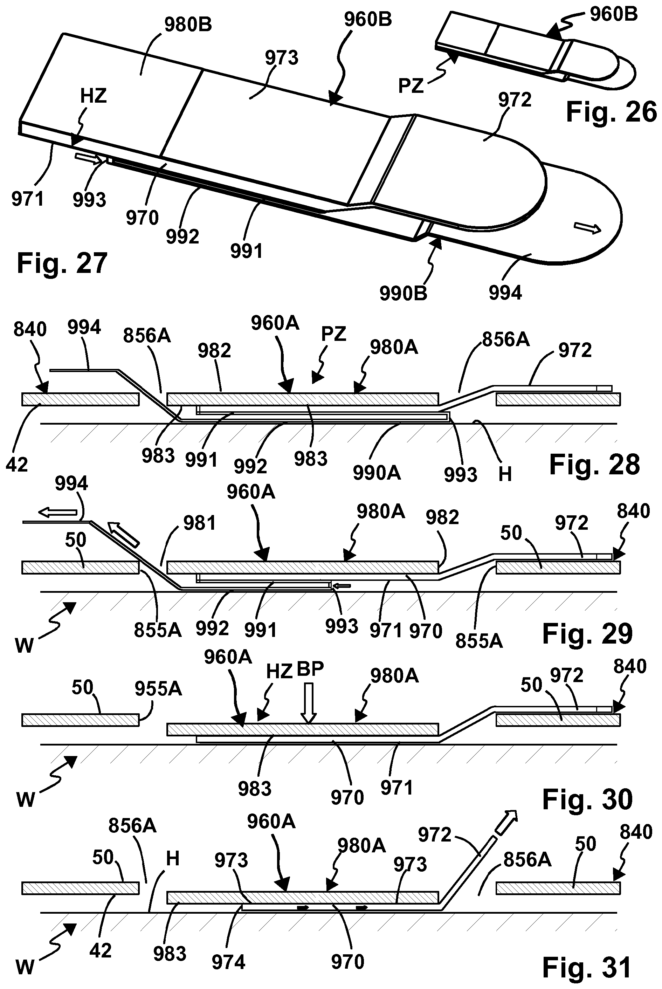

Am Abdeckabschnitt 991 ist über einen Umlenkabschnitt 993 ein Betätigungsabschnitt 992 angelenkt, dessen freier Endbereich den Griffabschnitt 994 bildet. In der Art einer Abschäl-Bewegung kann nun die Abdeckung 990A, 990B durch eine Zugbetätigung des Griffabschnittes 994 (in Figur 27 und 29 durch Pfeile dargestellt) von der Haftfläche 971 sozusagen abgezogen oder abgestellt werden. Dadurch kommt die Haftfläche 971 frei und kann an der Arbeitsfläche H anhaften.

Es ist möglich, dass nach dem Entfernen der Abdeckung 990A, 990B noch ein Abstand zwischen der Haftfläche 971 und der Arbeitsfläche H vorhanden ist. Durch eine entsprechende Druckbetätigung mit einer Anpresskraft BP, beispielsweise auf den Trägerkörper 980A oder denjenigen Abschnitt des Anlagekörpers 40, 840, wo das Halteelement 960A, 960B angeordnet ist, kann die Haftfläche 971 in haftenden Kontakt mit der Arbeitsfläche H gebracht werden.

Auch die Entfernung des Halteelements 960A, 960B aus dem Haftzustand HZ ist bei auf der Arbeitsfläche H auf fliegendem Anlagekörper 40, 840 ohne weiteres möglich. Das Haftmittel 970 weist nämlich den Handhabungsabschnitt 972 auf, der durch einen Bediener ergriffen werden kann, um das Haftmittel 970 zu dehnen, wodurch die Haftung der Haftfläche 871 mit der eine Anlagefläche bildenden Arbeitsfläche H aufgehoben wird somit das Halteelement 960A, 960B sozusagen von der Arbeitsfläche H abgelöst wird. Danach kann der Anlagekörper 40, 840 relativ zur Arbeitsfläche H wieder frei bewegt werden.

Bei dem Halteelement 960A sind der Handhabungsabschnitt 972 und der Betätigungsabschnitt 992 an einander entgegengesetzten Längsendbereichen angeordnet, beim Halteelement 960B am gleichen Längsendbereich. Dabei ist es vorteilhaft, wenn der Betätigungsabschnitt 992 der Abdeckung 990B vor den Handhabungsabschnitt 972 vorsteht, sodass er leichter ergreifbar ist. Dies ist dem Umstand geschuldet, dass ja zunächst die Abdeckung 990B anhand des Betätigungsabschnitts 992 entfernt werden muss, bevor das Halteelement 960B anschließend durch Betätigung des Handhabungsabschnitts 972 sozusagen inaktiviert wird.

## Patentansprüche

1. Halteelement (60) für eine Vorrichtung zum Stützen und/oder Führen einer Werkzeugmaschine (20) oder eines Werkzeugs oder eines Werkstücks (W) oder als Bestandteil einer derartigen Vorrichtung, wobei die Vorrichtung einen Anlagekörper (40) mit einer Anlagefläche (42) zum Anlegen an eine Arbeitsfläche (H) eines Werkstücks (W) oder einer Wand aufweist, wobei das Halteelement (60) ein Haftmittel (70) zum Anhaften an der Arbeitsfläche (H) und ein Befestigungsmittel zu einem lösbaren Halt an dem Anlagekörper (40) aufweist, wobei das Befestigungsmittel mindestens eine Formschlusskontur (90) für einen formschlüssigen Halt an einer Halteelement-Aufnahme (55) des Anlagekörpers (40) umfasst, und wobei das das Haftmittel (70) bei an der Arbeitsfläche (H) anliegender Anlagefläche (42) des Anlagekörpers (40) aus einem Positionierzustand (PZ), bei dem das Haftmittel (70) nicht in Kontakt mit der Arbeitsfläche (H) ist und die Anlagefläche (42) bezüglich der Arbeitsfläche (H) positionierbar ist, in einen Haftzustand (HZ) bringbar ist, bei dem das Haftmittel (70) an der Arbeitsfläche (H) anhaftet und den Anlagekörper (40) an der Arbeitsfläche (H) fixiert, **dadurch gekennzeichnet, dass** das Halteelement (60, 860, 960) zu einer Verstellung zwischen dem Positionierzustand (PZ) und dem Haftzustand (HZ) biegeflexibel ist, und dass das Halteelement (60, 860, 960) quer zu seiner Längserstreckung oder quer zu einer zum Wickeln oder Rollen des Halteelements (60, 860, 960) vorgesehenen Rollrichtung mindestens eine Aussparung (84) und/oder mindestens einen Querversteifungskörper (81), insbesondere eine Querrippe, aufweist.

2. Halteelement nach Anspruch 1, **dadurch gekennzeichnet, dass** die Formschlusskontur (90) mindestens eine Hintergreif-Kontur (91) zum Hintergreifen mindestens einer Hintergreiffläche (95) der Halteelement-Aufnahme (55) des Anlagekörpers (40) aufweist, wobei die Hintergreif-Kontur (91) die Hintergreiffläche (95) des Anlagekörpers (40), wenn sie an der Hintergreif-Kontur (91) anliegt, mit mindestens einer in Richtung der Anlagefläche (42) gerichteten Stützkraftkomponente (SK) im Sinne eines Haltens des Anlagekörpers (40) an der Arbeitsfläche (H) stützt, wobei vorteilhaft vorgesehen ist, dass mindestens eine Hintergreif-Kontur (91) eine Schwalbenschwanzkontur und/oder mindestens einen Stützvorsprung (85) und/oder mindestens einen Haken umfasst.

3. Halteelement nach einem der vorhergehenden Ansprüche, **dadurch gekennzeichnet, dass** das Halteelement (60) mit mindestens einer Stützkraftkomponente (SQ) parallel zur Anlagefläche (42) in der Halteelement-Aufnahme (55) abgestützt oder abstützbar ist und/oder dass die Halteelement-Aufnahme (55) ein Fenster und/oder eine Durchtrittsöffnung aufweist, die sich zwischen der Anlagefläche (42) und einer zu der Anlagefläche (42) entgegengesetzten Oberseite des Anlagekörpers (40) erstreckt, und/oder dass die Halteelement-Aufnahme (55) eine Längsführung zum Führen des Halteelements (60, 860, 960) entlang einer Längsachse, die sich insbesondere parallel zu der Anlagefläche (42) erstreckt, aufweist.

4. Halteelement nach einem der vorhergehenden Ansprüche, **dadurch gekennzeichnet, dass** die Halteelement-Aufnahme (55) eine Steckaufnahme (55A) ist oder umfasst, in die das Halteelement (60, 860, 960) einsteckbar ist, wobei vorteilhaft vorgesehen ist, dass sich die Steckaufnahme (55A) von einer zu der Anlagefläche (42) entgegengesetzten Oberseite des Anlagekörpers (40) zu der Anlagefläche (42) erstreckt und/oder an der Oberseite des Anlagekörpers (40) offen ist und/oder dass es in der Steckaufnahme (55A) aus einem Positionierzustand (PZ), bei dem das Haftmittel (70) nicht in Kontakt mit der Arbeitsfläche (H) ist und die Anlagefläche (42) bezüglich der Arbeitsfläche (H) verstellbar ist, in einen Haftzustand (HZ) bringbar, insbesondere verschwenkbar und/oder translatorisch oder linear verschieblich, ist, bei dem das Haftmittel (70) an der Arbeitsfläche (H) anhaftet und den Anlagekörper (40) an der Arbeitsfläche (H) fixiert.

5. Halteelement nach einem der vorhergehenden Ansprüche, **dadurch gekennzeichnet, dass** das Halteelement (60, 860, 960) zu einer Ausrichtung oder einem Halt des Haftmittels (70), insbesondere im Wesentlichen parallel, bezüglich der Anlagefläche (42) des Anlagekörpers (40) mindestens einen sich quer zu dem Haftmittel (70) oder zu einer Haftoberfläche des Haftmittels (70) erstreckenden Stützvorsprung (85) zum Abstützen an einer zur Anlagefläche (42) parallelen oder in einem Winkel von weniger als 90° zu der Anlagefläche (42) geneigten Stützkontur (53) des Anlagekörpers (40) aufweist.

6. Halteelement nach einem der vorhergehenden Ansprüche, **dadurch gekennzeichnet, dass** das Halteelement (60, 860, 960) mindestens eine zu einer Haftoberfläche des Haftmittels (70) winkelige, insbesondere rechtwinkelige, Stützfläche (88) zum Abstützen an dem Anlagekörper (40) aufweist, sodass der Anlagekörper (40) in Bezug auf parallel zu der Anlagefläche (42) wirkenden Kräfte an dem Halteelement (60, 860, 960) abgestützt ist, wobei vorteilhaft vorgesehen ist, dass die mindestens eine Stützfläche (88) an einander entgegengesetzten Seiten des Halteelements (60, 860, 960) vorgesehenen Stützflächen (88) umfasst und/oder dass die Stützflächen (88) das Halteelement (60, 860, 960) in Bezug auf alle parallel zu der Anlagefläche (42) wirkende Kräfte an dem Anlagekörper (40) abstützen.

7. Halteelement nach einem der vorhergehenden Ansprüche, **dadurch gekennzeichnet, dass** der Anlagekörper (40) eine zu der Anlagefläche (42) entgegengesetzte Oberseite aufweist, die die Stützkontur (53) bildet oder an der die Stützkontur (53) angeordnet ist, und/oder dass die Stützkontur (53) eine Führungsaufnahme einer Linearführung und der mindestens eine Stützvorsprung (85) einen Führungsvorsprung zum Eingriff in die Führungsaufnahme zum linearen Führen des Halteelements (60, 860, 960) an dem Anlagekörper (40) bilden und/oder dass das Befestigungsmittel eine Rastanordnung zum Verrasten des Halteelements (60, 860, 960) mit dem Anlagekörper (40) und/oder eine Verklebung (973) aufweist, mit der das Halteelement (60, 860, 960) mit dem Anlagekörper (40) verklebt ist.

8. Halteelement nach einem der vorhergehenden Ansprüche, **dadurch gekennzeichnet, dass** das Haftmittel (70), insbesondere in dem oder einem Positionierzustand (PZ), durch eine Abdeckung (990A, 990B) abgedeckt ist, die von dem Haftmittel (70), insbesondere zu einem Verbringen in den oder einen Haftzustand (HZ), entfernbar ist, und/oder dass das Halteelement (60, 860, 960) in einem Stützzustand, bei dem das Halteelement (60, 860, 960) zumindest partiell, insbesondere an einem oder beiden seiner Längsenden, an dem Anlagekörper (40) abgestützt ist, aus dem Positionierzustand (PZ) in den Haftzustand (HZ) verformbar ist und/oder dass das Halteelement (60, 860, 960) im Sinne eines Aufrollens oder Abwickelns des Haftmittels (70) in Richtung zu der Arbeitsfläche (H) und/oder im Sinne eines Aufwickelns oder Aufrollens oder Abschälens des Haftmittels (70) von der Arbeitsfläche (H) weg rollbar oder aufwickelbar ist.

9. Halteelement (60, 860, 960) nach einem der vorhergehenden Ansprüche, **dadurch gekennzeichnet, dass** das Halteelement (60, 860, 960) und/oder die Halteelement-Aufnahme (50) an einer bezüglich der Anlagefläche (42) beweglichen, insbesondere biegeflexiblen, Partie des Anlagekörpers (40) angeordnet ist, sodass das Haftmittel (70) durch Betätigung der beweglichen Partie aus dem Positionierzustand (PZ) in den Haftzustand (HZ) verstellbar ist.

10. Halteelement nach einem der vorhergehenden Ansprüche, **dadurch gekennzeichnet, dass** das Haftmittel (70) eine Klebefläche zum Ankleben an die Arbeitsfläche (H) und/oder mindestens ein Klett-Haftmittel und/oder mindestens einen Saugabschnitt und/oder mindestens einen Saugkopf, insbesondere eine Anordnung mehrerer Saugköpfe, zum Ansaugen an die Arbeitsfläche (H) umfasst und/oder dass ein das Haftmittel (70) tragender oder bildender Haftkörper des Halteelements (60, 860, 960) einen durch einen Bediener in dem Haftzustand (HZ) manuell betätigbaren, insbesondere ergreifbaren, Handhabungsabschnitt (972) aufweist, anhand dessen der Haftkörper zu einem Verbringen des Haftmittels (70) aus dem Haftzustand (HZ) in einen von der Arbeitsfläche (H) des Werkstücks (W) entfernten Lösezustand betätigbar, insbesondere dehnbar, ist.

11. Halteelement nach einem der vorhergehenden Ansprüche, **dadurch gekennzeichnet, dass** es mindestens eine Durchtrittsöffnung für einen Befestigungsbolzen, insbesondere einen Nagel, mit dem das Halteelement (60, 860, 960) mit der Arbeitsoberfläche verbindbar ist, aufweist und/oder dass der Anlagekörper (40) plattenartig ist und/oder eine Führungsschiene ist oder umfasst und/oder mindestens eine langgestreckte Führungskontur (48) aufweist.

12. Halteelement nach einem der vorhergehenden Ansprüche, **dadurch gekennzeichnet, dass** das Haftmittel (70) durch Verstellung des Halteelements (60, 860, 960) bezüglich des Anlagekörpers (40), insbesondere durch Verstellung des Halteelements (60, 860, 960) in oder an einer zur Aufnahme des Halteelements vorgesehenen Halteelement-Aufnahme (55), insbesondere einer Aussparung, des Anlagekörpers (40) zwischen dem Positionierzustand (PZ) und dem Haftzustand (HZ) verstellbar ist, insbesondere aus dem Positionierzustand (PZ) in den Haftzustand (HZ), bringbar ist, und/oder dass das Haftmittel (70) durch Einbringen des Halteelements (60) in eine zur Aufnahme des Halteelements vorgesehene Halteelement-Aufnahme (55), insbesondere eine Aussparung, des Anlagekörpers (40) aus dem Positionierzustand (PZ) in den Haftzustand (HZ) bringbar ist und/oder dass das Halteelement (60) mindestens eine Stützkontur (64), insbesondere eine Rastkontur, zum Abstützen des Halteelements (60) an einer Widerlagerkontur (58A) der Halteelement-Aufnahme (55) in dem Positionierzustand (PZ) aufweist, wobei die Rastkontur (64) zum Verstellen des Halteelements (60) in Richtung des Haftzustands (HZ) an der Widerlagerkontur (58A) der Halteelement-Aufnahme (55) vorbei bewegbar ist.

13. Halteelement nach einem der vorhergehenden Ansprüche, **dadurch gekennzeichnet, dass** das Halteelement (60) eine Betätigungshandhabe (93) aufweist, mit der das Haftmittel (70) durch eine manuelle Bedienbetätigung, insbesondere eine Druckbetätigung in Richtung der Anlagefläche (42) oder eine Zugbetätigung eines Bedieners aus dem Positionierzustand (PZ) in den Haftzustand (HZ) bringbar ist, wobei vorteilhaft vorgesehen ist, dass die Betätigungshandhabe (93) seitlich vor den Anlagekörper (40) vorsteht und/oder von einer zu der Anlagefläche (42) des Anlagekörpers (40) abgewandten, insbesondere entgegengesetzten Seite des Anlagekörpers (40) für die Bedienbetätigung zugänglich ist, wenn das Halteelement (60) an dem Anlagekörper (40) angeordnet, insbesondere in einer Halteelement-Aufnahme (55) des Anlagekörpers (40) angeordnet ist.

14. Halteelement nach einem der vorhergehenden Ansprüche, **dadurch gekennzeichnet, dass** das Halteelement (60) eine derartige Gestalt, insbesondere Flachgestalt, aufweist, dass es im in der Halteelement-Aufnahme (55) aufgenommenen Zustand und den Anlagekörper an der Arbeitsfläche (H) fixierenden Zustand nicht vor eine Führungsfläche (54A) oder Stützfläche des Anlagekörpers (40) vorsteht, an der das Werkzeug oder die Werkzeugmaschine an dem Anlagekörper (54) geführt oder abgestützt ist, und/oder dass die Werkzeugmaschine oder das Werkzeug über das in der Halteelement-Aufnahme (55) aufgenommene Halteelement (60) hinweg beweglich führbar ist.

15. System umfassend ein Halteelement (60, 860, 960) gemäß einem der vorhergehenden Ansprüche und einen Anlagekörper (40) mit einer Halteelement-Aufnahme (55) für einen formschlüssigen Halt des Halteelements (60, 860, 960), wobei vorteilhaft vorgesehen ist, dass das System eine Werkzeugmaschine (20) umfasst, die durch die Vorrichtung stützbar und/oder führbar ist.

## Claims

1. A holding element (60) for a device for supporting and/or guiding a machine tool (20) or a tool or a workpiece (W) or as part of such a device, wherein the device has a contact body (40) having a contact surface (42) for contact on a work surface (H) of a workpiece (W) or a wall, wherein the holding element (60) has an adhesive means (70) for adhesion to the work surface (H), and a fastening means for a releasable hold on the contact body (40), wherein the fastening means comprises at least one formfitting contour (90) for a formfitting hold on a holding element receptacle (55) of the contact body (40) and wherein the adhesive means (70), when the contact surface (42) of the contact body (40) bears against the work surface (H), can be brought from a positioning state (PZ), in which the adhesive means (70) is not in contact with the work surface (H) and the contact surface (42) can be positioned with respect to the work surface (H), into an adhesive state (HZ), in which the adhesive means (70) adheres to the work surface (H) and fixes the contact body (40) on the work surface (H), **characterized in that**
the holding element (60, 860, 960) is flexible for an adjustment between the positioning state (PZ) and the adhesive state (HZ) and **in that** the holding element (60, 860, 960), transversely to its longitudinal extension or transversely to a rolling direction provided for winding or rolling the holding element (60, 860, 960), includes at least one recess (84) and/or at least one transverse reinforcing body (81), in particular a transverse rib.

2. The holding element as claimed in claim 1, **characterized in that** the formfitting contour (90) includes at least one rear engagement contour (91) for engaging behind at least one rear engagement surface (95) of the holding element receptacle (55) of the contact body (40), wherein the rear engagement contour (91) supports the rear engagement surface (95) of the contact body (40), when it bears against the rear engagement contour (91), with at least one supporting force component (SK) oriented in the direction of the contact surface (42) in the sense of holding the contact body (40) on the work surface (H) wherein it is advantageously provided that at least one rear engagement contour (91) comprises a dovetail contour and/or at least one support projection (85) and/or at least one hook.

3. The holding element as claimed in any one of the preceding claims, **characterized in that** the holding element (60) is supported or can be supported in the holding element receptacle (55) with at least one supporting force component (SQ) parallel to the contact surface (42) and/or **in that** the holding element receptacle (55) includes a window and/or a through opening which extends between the contact surface (42) and an upper side of the contact body (40) opposite to the contact surface (42) and/or **in that** the holding element receptacle (55) includes a longitudinal guide for guiding the holding element (60, 860, 960) along a longitudinal axis which extends in particular in parallel to the contact surface (42).

4. The holding element as claimed in any one of the preceding claims, **characterized in that** the holding element receptacle (55) is or comprises a plug-in receptacle (55A) into which the holding element (60, 860, 960) can be inserted wherein it is advantageously provided that the plug-in receptacle (55A) extends from an upper side of the contact body (40) opposite to the contact surface (42) to the contact surface (42) and/or is open on the upper side of the contact body (40) and/or that it can be brought, in particular can be pivoted and/or can be translationally or linearly displaced, in the plug-in receptacle (55A) from a positioning state (PZ) in which the adhesive means (70) is not in contact with the work surface (H) and the contact surface (42) is adjustable with respect to the work surface (H), into an adhesive state (HZ), in which the adhesive means (70) adheres to the work surface (H) and the contact body (40) is fixed on the work surface (H).

5. The holding element as claimed in any one of the preceding claims, **characterized in that** the holding element (60, 860, 960), for aligning or holding the adhesive means (70), in particular essentially in parallel, with respect to the contact surface (42) of the contact body (40), includes at least one support projection (85) extending transversely to the adhesive means (70) or to an adhesive surface of the adhesive means (70) for supporting on a support contour (53), which is parallel to the contact surface (42) or inclined at an angle of less than 90° to the contact surface (42), of the contact body (40).

6. The holding element as claimed in any one of the preceding claims, **characterized in that** the holding element (60, 860, 960) includes at least one support surface (88) which is angled, in particular right-angled, to an adhesive surface of the adhesive means (70) for supporting on the contact body (40), so that the contact body (40) is supported on the holding element (60, 860, 960) with respect to forces acting in parallel to the contact surface (42) wherein it is advantageously provided that the at least one support surface (88) comprises support surfaces (88) provided on opposite sides of the holding element (60, 860, 960) and/or **in that** the support surfaces (88) support the holding element (60, 860, 960) with respect to all forces acting in parallel to the contact surface (42) on the contact body (40).

7. The holding element as claimed in any one of the preceding claims, **characterized in that** the contact body (40) includes an upper side opposite to the contact surface (42) which forms the support contour (53) or on which the support contour (53) is arranged and/or **in that** the support contour (53) forms a guide receptacle of a linear guide and the at least one support projection (85) forms a guide projection for engaging the guide receptacle for linearly guiding the holding element (60, 860, 960) on the contact body (40) and/or **in that** the fastening means has a latching arrangement for latching the holding element (60, 860, 960) with the contact body (40) and/or an adhesive bonding means (973) using which the holding element (60, 860, 960) is adhesively bonded to the contact body (40).

8. The holding element as claimed in any one of the preceding claims, **characterized in that** the adhesive means (70), in particular in the or a positioning state (PZ), is covered by a cover (990A, 990B), which is removable from the adhesive means (70) to bring it into the or an adhesive state (HZ) and/or **in that** the holding element (60, 860, 960), in a supporting state in which the holding element (60, 860, 960) is supported at least partially, in particular at one or both of its longitudinal ends, on the contact body (40), is deformable from the positioning state (PZ) to the adhesive state (HZ) and/or **in that** the holding element (60, 860, 960) can be rolled or wound up in the sense of rolling up or unwinding the adhesive (70) in the direction toward the work surface (H) and/or in the sense of winding or rolling up or peeling off of the adhesive (70), can be rolled or wound up away from the work surface (H).

9. The holding element (60, 860, 960) as claimed in any one of the preceding claims, **characterized in that** the holding element (60, 860, 960) and/or the holding element receptacle (50) is arranged on a part of the contact body (40) movable, in particular flexible, with respect to the contact surface (42), so that the adhesive means (70) can be adjusted from the positioning state (PZ) into the adhesive state (HZ) by actuating the movable part.

10. The holding element as claimed in any one of the preceding claims, **characterized in that** the adhesive means (70) comprises an adhesive bonding surface for adhesive bonding to the work surface (H) and/or at least one hook-and-loop adhesive means and/or at least one suction section and/or at least one suction head, in particular an arrangement of multiple suction heads, for suction to the work surface (H), and/or **in that** an adhesive body of the holding element (60, 860, 960) carrying or forming the adhesive means (70) has a handling section (972) which can be manually actuated, in particular grasped, by an operator in the adhesive state (HZ), by means of which the adhesive body can be actuated, in particular stretched, to bring the adhesive means (70) from the adhesive state (HZ) into a release state removed from the work surface (H) of the workpiece (W).

11. The holding element as claimed in any one of the preceding claims, **characterized in that** it includes at least one through opening for a fastening bolt, in particular a nail, using which the holding element (60, 860, 960) can be connected to the work surface and/or **in that** the contact body (40) is platelike and/or is or comprises a guide rail and/or includes at least one elongated guide contour (48).

12. The holding element as claimed in any one of the preceding claims, **characterized in that** the adhesive means (70), by adjusting the holding element (60, 860, 960) with respect to the contact body (40), in particular by adjusting the holding element (60, 860, 960) in or on a holding element receptacle (55) provided for receiving the holding element, in particular a recess, of the contact body (40), can be brought between the positioning state (PZ) and the adhesive state (HZ), in particular can be brought from the positioning state (PZ) into the adhesive state (HZ), and/or in that the adhesive means (70), by introducing the holding element (60) into a holding element receptacle (55) provided for receiving the holding element, in particular a recess, of the contact body (40), can be brought from the positioning state (PZ) into the adhesive state (HZ) and/or **in that** the holding element (60) includes at least one support contour (64), in particular a latching contour, for supporting the holding element (60) on a buttress contour (58A) of the holding element receptacle (55) in the positioning state (PZ), wherein the latching contour (64) is movable past the buttress contour (58A) of the holding element receptacle (55) for adjusting the holding element (60) in the direction of the adhesive state (HZ).

13. The holding element as claimed in any one of the preceding claims, **characterized in that** the holding element (60) includes an actuating handle (93), using which the adhesive means (70), by way of a manual operating actuation, in particular a pressure actuation in the direction of the contact surface (42) or a pulling actuation by an operator, can be brought from the positioning state (PZ) into the adhesive state (HZ) wherein it is advantageously provided that the actuating handle (93) protrudes laterally in front of the contact body (40) and/or is accessible for the operating actuation from a side of the contact body (40) facing away, in particular opposite to, the contact surface (42) of the contact body (40), when the holding element (60) is arranged on the contact body (40), in particular is arranged in a holding element receptacle (55) of the contact body (40).

14. The holding element as claimed in any one of the preceding claims, **characterized in that** the holding element (60) has such a shape, in particular a flat shape, that in the state received in the holding element receptacle (55) and the state fixing the contact body on the work surface (H), it does not protrude in front of a guide surface (54A) or support surface of the contact body (40) on which the tool or the machine tool is guided or supported on the contact body (54), and/or **in that** the machine tool or the tool can be guided over the holding element (60) received in the holding element receptacle (55).

15. A system comprising a holding element (60, 860, 960) as claimed in any one of the preceding claims and a contact body (40) having a holding element receptacle (55) for a formfitting hold of the holding element (60, 860, 960), wherein it is advantageously provided that the system comprises a machine tool (20), which can be supported and/or guided by the device.

## Revendications

1. Élément de retenue (60) pour un dispositif de support et/ou de guidage d'une machine-outil (20) ou d'un outil ou d'une pièce (W) ou faisant partie d'un dispositif de ce type, le dispositif comportant un corps d'appui (40) avec une surface d'appui (42) destinée à être appliquée sur une surface de travail (H) d'une pièce (W) ou d'une paroi, l'élément de retenue (60) comportant un moyen d'adhérence (70) destiné à adhérer à la surface de travail (H) et un moyen de fixation pour une retenue amovible sur le corps d'appui (40), le moyen de fixation comprenant au moins un contour à complémentarité de forme (90) pour une retenue à complémentarité de forme sur un logement (55) d'élément de retenue du corps d'appui (40), et le moyen d'adhérence (70) pouvant être amené, lorsque la surface d'appui (42) du corps d'appui (40) repose sur la surface de travail (H), depuis un état de positionnement (PZ), dans lequel le moyen d'adhérence (70) n'est pas en contact avec la surface de travail (H) et la surface d'appui (42) peut être positionnée par rapport à la surface de travail (H), dans un état d'adhérence (HZ), dans lequel le moyen d'adhérence (70) adhère à la surface de travail (H) et bloque le corps d'appui (40) sur la surface de travail (H), **caractérisé en ce que** l'élément de retenue (60, 860, 960) est flexible pour un ajustement entre l'état de positionnement (PZ) et l'état d'adhérence (HZ), et que l'élément de retenue (60, 860, 960) comporte au moins un évidement (84) et/ou au moins un corps de renforcement transversal (81), en particulier une nervure transversale, transversalement à son extension longitudinale ou transversalement à une direction de roulage prévue pour enrouler ou rouler l'élément de retenue (60, 860, 960).

2. Élément de retenue selon la revendication 1, **caractérisé en ce que** le contour à complémentarité de forme (90) comporte au moins un contour de prise par l'arrière (91) destiné à venir en prise par l'arrière avec au moins une surface de prise par l'arrière (95) du logement (55) d'élément de retenue du corps d'appui (40), le contour de prise par l'arrière (91) supportant la surface de prise par l'arrière (95) du corps d'appui (40), lorsqu'elle repose sur le contour de prise par l'arrière (91), avec au moins une composante de force de support (SK) dirigée en direction de la surface d'appui (42) au sens d'une retenue du corps d'appui (40) sur la surface de travail (H), le fait qu'au moins un contour de prise par l'arrière (91) comprend un contour de queue d'aronde et/ou au moins une saillie de support (85) et/ou au moins un crochet étant avantageusement prévu.

3. Élément de retenue selon l'une des revendications précédentes, **caractérisé en ce que** l'élément de retenue (60) prend appui ou peut prendre appui avec au moins une composante de force de support (SQ) parallèlement à la surface d'appui (42) dans le logement (55) d'élément de retenue et/ou que le logement (55) d'élément de retenue comporte une fenêtre et/ou une ouverture de passage, qui s'étend entre la surface d'appui (42) et un côté supérieur, opposé à la surface d'appui (42), du corps d'appui (40), et/ou que le logement (55) d'élément de retenue comporte un guidage longitudinal destiné à guider l'élément de retenue (60, 860, 960) le long d'un axe longitudinal, qui s'étend en particulier parallèlement à la surface d'appui (42).

4. Elément de retenue selon l'une des revendications précédentes, **caractérisé en ce que** le logement (55) d'élément de retenue est ou comprend un logement d'enfichage (55A), dans lequel l'élément de retenue (60, 860, 960) peut être enfiché, le fait que le logement d'enfichage (55A) s'étend depuis un côté supérieur, opposé à la surface d'appui (42), du corps d'appui (40) jusqu'à la surface d'appui (42) et/ou qu'il est ouvert sur le côté supérieur du corps d'appui (40) et/ou qu'il peut être amené, en particulier par pivotement et/ou par translation ou par coulissement linéaire, dans le logement d'enfichage (55A) depuis un état de positionnement (PZ), dans lequel le moyen d'adhérence (70) n'est pas en contact avec la surface de travail (H) et la surface d'appui (42) peut être ajustée par rapport à la surface de travail (H), dans un état d'adhérence (HZ), dans lequel le moyen d'adhérence (70) adhère à la surface de travail (H) et bloque le corps d'appui (40) sur la surface de travail (H).

5. Élément de retenue selon l'une des revendications précédentes, **caractérisé en ce que** l'élément de retenue (60, 860, 960) comporte au moins une saillie de support (85) s'étendant transversalement au moyen d'adhérence (70) à ou une surface d'adhérence du moyen d'adhérence (70), destinée à prendre appui sur un contour d'appui (53) du corps d'appui (40) parallèle à la surface d'appui (42) ou incliné selon un angle inférieur à 90° par rapport à la surface d'appui (42) pour orienter ou retenir le moyen d'adhérence (70), en particulier sensiblement parallèlement, par rapport à la surface d'appui (42) du corps d'appui (40).

6. Elément de retenue selon l'une des revendications précédentes, **caractérisé en ce que** l'élément de retenue (60, 860, 960) comporte au moins une surface de support (88) formant un angle, en particulier un angle droit, par rapport à une surface d'adhérence du moyen d'adhérence (70), destinée à prendre appui sur le corps d'appui (40) si bien que le corps d'appui (40) prend appui sur l'élément de retenue (60, 860, 960) par rapport à des forces agissant parallèlement à la surface d'appui (42), le fait que l'au moins une surface de support (88) comprend des surfaces de support (88) prévues sur des côtés opposés les uns aux autres de l'élément de retenue (60, 860, 960) et/ou que les surfaces de support (88) soutiennent l'élément de retenue (60, 860, 960) sur le corps d'appui (40) par rapport à toutes les forces agissant parallèlement à la surface d'appui (42) étant avantageusement prévu.

7. Elément de retenue selon l'une des revendications précédentes, **caractérisé en ce que** le corps d'appui(40) comporte un côté supérieur opposé à la surface d'appui (42), qui forme le contour de support (53) ou sur lequel le contour de support (53) est disposé, et/ou que le contour de support (53) forme un logement de guidage d'un guidage linéaire et l'au moins une saillie de support (85) forme une saillie de guidage destinée à venir en prise avec le logement de guidage pour le guidage linéaire de l'élément de retenue (60, 860, 960) sur le corps d'appui (40) et/ou que le moyen de fixation comporte un ensemble d'enclenchement destiné à enclencher l'élément de retenue (60, 860, 960) avec le corps d'appui (40) et/ou un collage (973), avec lequel l'élément de retenue (60, 860, 960) est collé au corps d'appui (40).

8. Élément de retenue selon l'une des revendications précédentes, **caractérisé en ce que** le moyen d'adhérence (70) est recouvert, en particulier dans l'état ou un état de positionnement (PZ), par un recouvrement (990A, 990B), qui peut être retiré du moyen d'adhérence (70), en particulier pour être amené dans l'état ou un état d'adhérence (HZ), et/ou que l'élément de retenue (60, 860, 960) peut être déformé depuis l'état de positionnement (PZ) dans l'état d'adhérence (HZ) dans un état de support, dans lequel l'élément de retenue (60, 860, 960) prend appui sur le corps d'appui (40) au moins en partie, en particulier sur une ou ses deux extrémités longitudinales et/ou que l'élément de retenue (60, 860, 960) peut être roulé ou enroulé au sens d'un roulement ou d'un déroulement du moyen d'adhérence (70) en direction de la surface de travail (H) et/ou au sens d'un enroulement ou d'un roulement ou d'un pelage du moyen d'adhérence (70) à l'écart de la surface de travail (H).

9. Élément de retenue (60, 860, 960) selon l'une des revendications précédentes, **caractérisé en ce que** l'élément de retenue (60, 860, 960) et/ou le logement (50) d'élément de retenue sont disposés sur une partie du corps d'appui (40) mobile par rapport à la surface d'appui (42), en particulier flexible si bien que le moyen d'adhérence (70) peut être ajusté par l'actionnement de la partie mobile depuis l'état de positionnement (PZ) dans l'état d'adhérence (HZ).

10. Élément de retenue selon l'une des revendications précédentes, **caractérisé en ce que** le moyen d'adhérence (70) comporte une surface collante à coller sur la surface de travail (H) et/ou au moins un moyen d'adhérence auto-agrippant et/ou au moins une section d'aspiration et/ou au moins une tête d'aspiration, en particulier un ensemble de plusieurs têtes d'aspiration, destinée à être appliquée par aspiration sur la surface de travail (H) et/ou qu'un corps d'adhérence de l'élément de retenue (60, 860, 960) portant ou formant le moyen d'adhérence (70) comporte une section de manipulation (972), pouvant être actionnée manuellement, en particulier pouvant être saisie, par un utilisateur dans l'état d'adhérence (HZ), à l'aide de laquelle le corps d'adhérence peut être actionné, en particulier peut être étiré, pour amener le moyen d'adhérence (70) depuis l'état d'adhérence (HZ) dans un état de détachement éloigné de la surface de travail (H) de la pièce (W).

11. Élément de retenue selon l'une des revendications précédentes, **caractérisé en ce qu'**il comporte au moins un orifice de passage pour un boulon de fixation, en particulier un clou, avec lequel l'élément de retenue (60, 860, 960) peut être relié à la surface de travail et/ou que le corps d'appui (40) est en forme de plaque et/ou est ou comprend un rail de guidage et/ou comporte au moins un contour de guidage (48) allongé.

12. Élément de retenue selon l'une des revendications précédentes, **caractérisé en ce que** le moyen d'adhérence (70) peut être ajusté entre l'état de positionnement (PZ) et l'élément d'adhérence (HZ) par l'ajustement de l'élément de retenue (60, 860, 960) par rapport au corps d'appui (40), en particulier par l'ajustement de l'élément de retenue (60, 860, 960) dans ou sur un logement (55) d'élément de retenue prévu pour le logement de l'élément de retenue, en particulier un évidement, du corps d'appui (40), et/ou que le moyen d'adhérence (70) peut être amené depuis l'état de positionnement (PZ) dans l'état d'adhérence (HZ) par l'introduction de l'élément de retenue (60) dans un logement (55) d'élément de retenue prévu pour loger l'élément de retenue, en particulier un évidement, du corps d'appui (40) et/ou que l'élément de retenue (60) comporte au moins un contour de support (64), en particulier un contour d'enclenchement, pour soutenir l'élément de retenue (60) sur un contour de contre-appui (58A) du logement (55) d'élément de retenue dans l'état de positionnement (PZ), le contour d'enclenchement (64) pouvant être déplacé le long du contour de contre-appui (58A) du logement (55) d'élément de retenue pour ajuster l'élément de retenue (60) en direction de l'état d'adhérence (HZ).

13. Élément de retenue selon l'une des revendications précédentes, **caractérisé en ce que** l'élément de retenue (60) comporte une manette d'actionnement (93), avec laquelle le moyen d'adhérence (70) peut être amené depuis l'état de positionnement (PZ) dans l'état d'adhérence (HZ) par un actionnement d'utilisation manuel, en particulier par un actionnement par pression en direction de la surface d'appui (42) ou un actionnement de traction d'un utilisateur, le fait que la manette d'actionnement (93) fait saillie latéralement devant le corps d'appui (40) et/ou est accessible depuis un côté du corps d'appui (40) détourné, en particulier opposé, par rapport à la surface d'appui (42) du corps d'appui (40) pour l'actionnement d'utilisation lorsque l'élément de retenue (60) est disposé sur le corps d'appui (40), en particulier est disposé dans un logement (55) d'élément de retenue du corps d'appui (40) étant avantageusement prévu.

14. Elément de retenue selon l'une des revendications précédentes, **caractérisé en ce que** l'élément de retenue (60) présente une telle forme, en particulier une forme plate, qu'il ne fait pas saillie, dans l'état logé dans le logement (55) d'élément de retenue ou dans l'état bloquant le corps d'appui sur la surface de travail (H), devant une surface de guidage (54A) ou une surface de support du corps d'appui (40), sur laquelle l'outil ou la machine-outil est guidé(e) ou soutenu(e) sur le corps d'appui (54), et/ou que la machine-outil ou l'outil peut être guidé(e) de manière mobile au-delà de l'élément de retenue (60) logé dans le logement (55) d'élément de retenue.

15. Système comprenant un élément de retenue (60, 860, 960) selon l'une des revendications précédentes et un corps d'appui (40) avec un logement (55) d'élément de retenue pour une retenue par complémentarité de forme de l'élément de retenue (60, 860, 960), le fait que le système comprend une machine-outil (20) qui peut être supportée et/ou guidée par le dispositif étant avantageusement prévu.
